(19) Europäisches Patentamt
European Patent Office
Office européen des brevets

(11) **EP 4 310 323 B1**

(12) **EUROPÄISCHE PATENTSCHRIFT**

(45) Veröffentlichungstag und Bekanntmachung des Hinweises auf die Patenterteilung:
**28.01.2026  Patentblatt 2026/05**

(21) Anmeldenummer: **22186125.5**

(22) Anmeldetag: **20.07.2022**

(51) Internationale Patentklassifikation (IPC):
**F03D 7/02** (2006.01)        **G10K 11/16** (2006.01)

(52) Gemeinsame Patentklassifikation (CPC):
**F03D 7/0296; G10K 11/16;** F05B 2260/962;
F05B 2270/333; Y02E 10/72

(54) **VERFAHREN ZUM VERÄNDERN EINER SCHALLEMISSION EINER WINDENERGIEANLAGE**

METHOD FOR ADJUSTING THE NOISE EMISSIONS OF A WIND TURBINE

PROCÉDÉ PERMETTANT DE MODIFIER UNE ÉMISSION SONORE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.01.2024   Patentblatt 2024/04**

(73) Patentinhaber: **Wobben Properties GmbH**
**26607 Aurich (DE)**

(72) Erfinder: **KÜWEN, Henning**
**26129 Oldenburg (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
WO-A1-2018/046068     WO-A1-2018/086671
WO-A1-2018/113871     CN-B- 103 344 323

**Beschreibung**

Die vorliegende Erfindung betrifft ein Verfahren zum Verändern einer Schallemission einer Windenergieanlage. Die vorliegende Erfindung betrifft ebenfalls eine Windenergieanlage, in der ein solches Verfahren implementiert ist.

Windenergieanlagen sind bekannt und weisen üblicherweise einen Generator auf, um aus der Rotation eines durch Wind angetriebenen Rotors elektrische Energie zu erzeugen. Dabei wird vom Generator der Windenergieanlage jedoch auch Schall erzeugt. Dieser Schall breitet sich aus und kann an einem Immissionsort als störender Lärm wahrgenommen werden. Bei üblichen Windenergieanlagen können neben dem Generator noch weitere Schallquellen hinzu kommen.

Um Personen am Immissionsort zu schützen, müssen Vorgaben bezüglich der Schallabgabe eingehalten werden. Eine dieser Vorgaben bestimmt sich aus einer Schallmessung nach DIN 61400-11.

Neben der Lautstärke, also der Amplitude des Schalls, werden dabei auch psychoakustische Effekte mitberücksichtigt. Als besonders störend wird dabei empfunden, wenn ein Schall deutlich aus dem Hintergrundschall, insbesondere einem breitbandigen, durch die Rotorblätter erzeugten Schall, herausragt. In einer Tonanalyse ist dies unter anderem daran erkennbar, dass bei einer bestimmten Frequenz lokal die Amplitude deutlich über einem Grundspektrum liegt. Dieser Effekt wird auch als Tonhaltigkeit bezeichnet.

Die Tonhaltigkeit tritt somit auf, wenn innerhalb eines Schallspektrums Einzeltöne deutlich hervortreten bzw. zu hören sind. Dieser Effekt kann bspw. auftreten, wenn eine auftretende Frequenz gleich oder annähernd gleich einer Eigenfrequenz ist und es zu Resonanzen kommt. Sie kann auch auftreten, wenn ein schallerzeugendes Bauteil selbst eine dominante Frequenz aufweist, die als Schall abgestrahlt wird, und gegenüber anderen Schallquellen herausragt.

In Vorgaben an Windenergieanlagen wird die Tonhaltigkeit mitberücksichtigt. Je stärker der Effekt ist, je stärker also eine Tonhaltigkeit ist, desto leiser muss dieser von der Windenergieanlage erzeugte Schall insgesamt sein. Die Schallamplitude muss dann abgesenkt werden.

Um die Vorgaben einhalten zu können, kann es daher vorkommen, dass die Drehzahl des Rotors abgesenkt werden muss, und dadurch weniger elektrische Leistung ins Netz eingespeist werden kann. Es kann auch vorkommen, dass die Windenergieanlage nicht in dem betroffenen Betriebsmodus betrieben werden darf und im schlimmsten Fall abgeschaltet werden muss. Beispiele aus dem Stand der Technik sind aus WO2018086671A1 und WO2018046068A1 bekannt.

Aufgabe der vorliegenden Erfindung ist es somit, eines der angesprochenen Probleme zu lösen oder zumindest eine Alternative vorzuschlagen. Insbesondere sollen Tonhaltigkeiten bei Windenergieanlagen bzw. ihre Wahrnehmung verringert werden.

Erfindungsgemäß wird dazu ein Verfahren nach Anspruch 1 vorgeschlagen. Das Verfahren betrifft somit ein Verändern einer Schallemission einer Windenergieanlage. Die zu Grunde liegende Windenergieanlage umfasst eine Gondel und einen Generator mit einem in seiner Drehzahl einstellbaren Rotor. Der Rotor weist wenigstens ein Rotorblatt auf. Der Generator erzeugt Schall mit wenigstens einer von der Rotordrehzahl abhängigen charakteristischen Generatorschallfrequenz. Die Windenergieanlage weist wenigstens einen Lüfter zum Kühlen der Gondel und/oder des Generators auf, und der wenigstens eine Lüfter ist in einer Lüfterdrehzahl einstellbar. Dabei erzeugt der wenigstens eine Lüfter Schall mit einer von der Lüfterdrehzahl abhängigen charakteristischen Lüfterschallfrequenz. Die Lüfterdrehzahl des wenigstens einen Lüfters wird in Abhängigkeit von der Rotordrehzahl so eingestellt, dass die Lüfterschallfrequenz von der wenigstens einen Generatorschallfrequenz abweicht.

Die charakteristische Generatorschallfrequenz ist die Frequenz, die einem dominierenden Ton des Generatorschalls entspricht. Dabei wird die charakteristische Generatorschallfrequenz bzw. der dominierende Ton durch die Konstruktion des Generators bedingt.

Generatorschall mit einer charakteristischen Generatorschallfrequenz ist in der Regel in seiner Amplitude signifikant höher als der übrige Schall mit einem Spektrum im Bereich der charakteristischen Generatorschallfrequenz. Bildlich gesprochen sticht der Generatorschall mit der Generatorschallfrequenz aus dem Schall mit dem restlichen benachbarten Spektrum heraus. Je stärker der Unterschied zwischen der Amplitude des Generatorschalls mit der charakteristischen Generatorschallfrequenz und der Amplitude des Schalls des umgebenden Grundspektrums ist, desto eher wird Generatorschall mit der Generatorschallfrequenz als unangenehmer Einzelton wahrgenommen.

Es wurde nun erkannt, dass der Lüfterschall des wenigstens einen Lüfters sich dem Generatorschall ungünstig überlagern kann, wodurch die Amplitude bei der charakteristischen Generatorschallfrequenz noch stärker aus dem umgebenden Grundspektrum heraussticht. Als ungünstig überlagern wird also verstanden, dass der resultierende Schall der Überlagerung aus Generatorschall und Lüfterschall eine höhere Amplitude als die einzelnen Schalle aufweist und/oder, dass zumindest der Peak des Gesamtschalls bei der Generatorschallfrequenz stärker aus dem Grundspektrum herausragt als der Peak des Generatorschalls alleine.

Dabei wurde erkannt, dass der Lüfterschall ebenfalls eine charakteristische Lüfterschallfrequenz aufweist, die einem dominierenden Ton des Lüfterschalls zugeordnet werden kann. Die charakteristische Lüfterschallfrequenz ist abhängig von der Lüfterdrehzahl und einer Anzahl an Lüfterrotorblättern.

Die Lüfterdrehzahl wird somit so eingestellt, dass die resultierende charakteristische Lüfterschallfrequenz sich von der Generatorschallfrequenz unterscheidet, sodass sich Lüfterschall und Generatorschall nicht ungünstig überlagern.

Ergänzend wurde erkannt, dass die Schallwahrnehmung verbessert werden kann, indem die Lüfterdrehzahl so eingestellt wird, dass die Lüfterschallfrequenz an die Generatorschallfrequenz herangefahren wird, um den Generatorschall zu maskieren. Es wird also vorgeschlagen, die Lüfterdrehzahl so einzustellen, dass die charakteristische Lüfterschallfrequenz im Bereich der Generatorschallfrequenz liegt, also in seiner Nähe.

Auf der einen Seite steht somit das Vermeiden der Generatorschallfrequenz, wodurch ungünstige Überlagerungen vermieden werden. Auf der anderen Seite wird durch eine Annäherung der Lüfterschallfrequenz an die Generatorschallfrequenz der Generatorschall maskiert. Mit anderen Worten wird der Generatorschall in seiner Frequenz verbreitert, so dass er nicht mehr als einzelner Ton wahrgenommen wird. Der Vorteil ist, dass dadurch eine Tonhaltigkeit vermieden wird.

Wie weit die Lüfterschallfrequenz von der Generatorschallfrequenz abweichen muss, um ein Optimum zwischen ungünstiger Überlagerung und gewünschter Maskierung zu erreichen, kann experimentell und/oder durch Simulationen bestimmt werden.

Es wurde auch erkannt, dass der Generator Generatorschall mit mehreren dominierenden Tönen, also Frequenzen, erzeugen kann. Der Generatorschall weist dann bei mehreren charakteristischen Generatorschallfrequenzen einen Peak auf. Es wird vorgeschlagen, die Lüfterdrehzahl des wenigstens einen Lüfters so einzustellen, dass die resultierende Lüfterschallfrequenz von allen Generatorschallfrequenzen abweicht.

Weiterhin wurde erkannt, dass auch die Lüfterschallfrequenzen mehrerer Lüfter sich ungünstig überlagern können, besonders dann, wenn baugleiche Lüfter mit identischer Drehzahl betrieben werden. Daher wird weiterhin vorgeschlagen, die Lüfterdrehzahlen der einzelnen Lüfter so einzustellen, dass die sich einstellenden Lüfterschallfrequenzen untereinander voneinander abweichen. Auch hierdurch wird eine ungünstige Überlagerung vermieden. Dabei soll wiederum berücksichtigt werden, die Lüfterdrehzahlen und dadurch die Lüfterschallfrequenzen so einzustellen, dass eine Maskierung des Generatorschalls und/oder des Lüfterschalls der übrigen Lüfter erfolgt.

Erfindungsgemäß wird in Abhängigkeit von der Rotordrehzahl wenigstens eine kritische Lüfterdrehzahl als von dem jeweiligen Lüfter zu vermeidende Drehzahl bestimmt. Die Lüfterdrehzahl jedes Lüfters wird derart vorgegeben, dass die wenigstens eine kritische Lüfterdrehzahl vermieden wird. Dabei ist die wenigstens eine kritische Lüfterdrehzahl bei baugleichen Lüftern gleich. Alternativ oder ergänzend entspricht die wenigstens eine kritische Lüfterdrehzahl einer Lüfterdrehzahl, bei der die zugehörige Lüfterschallfrequenz der Generatorschallfrequenz entspricht.

Durch Bestimmen der wenigstens einen kritischen Lüfterdrehzahl wird eine einfache Umsetzung des Verfahrens realisiert. Dazu kann zum Beispiel eine Funktion oder eine Tabelle hinterlegt sein, anhand der sich die kritische Lüfterdrehzahl abhängig von der Rotordrehzahl bestimmen lässt. Es ist auch möglich, eine Berechnungsgleichung zugrunde zu legen, anhand der die wenigstens eine kritische Lüfterdrehzahl in Abhängigkeit von der Rotordrehzahl berechnet werden kann. Bei einer gegebenen Rotordrehzahl kann so die wenigstens eine kritische Lüfterdrehzahl bestimmt werden, und die Drehzahl des jeweiligen Lüfters so eingestellt werden, dass die kritische Lüfterdrehzahl vermieden wird.

Dabei ist bekannt bzw. es lässt sich berechnen, welche charakteristische Lüfterschallfrequenz sich bei gegebener Lüfterdrehzahl einstellt. Ebenso ist bekannt bzw. berechenbar, welche charakteristische Generatorschallfrequenz sich bei gegebener Rotordrehzahl einstellt. Daher ist es auch möglich, zu bestimmen, welche Lüfterdrehzahl es zu vermeiden gilt. Nämlich gerade die, die zu einer charakteristischen Lüfterschallfrequenz führt, die der Generatorschallfrequenz entspricht.

Besonders wurde auch erkannt, dass die charakteristische Lüfterschallfrequenz konstruktionsbedingt durch den Lüfter vorgegeben ist. Die wenigstens eine kritische Lüfterdrehzahl ist somit bei baugleichen Lüftern gleich. Hier hat sich gezeigt, dass die Berechnung bzw. Bestimmung der wenigstens einen kritischen Lüfterdrehzahl für baugleiche Lüfter nur einmal durchgeführt werden muss.

Gemäß einem weiteren Aspekt wird als die Generatorschallfrequenz eine Harmonische einer Frequenzgröße des Generators, von der der Schall abhängt, verwendet. Insbesondere wird eine Harmonische einer Polpassierfrequenz verwendet. Die Polpassierfrequenz gibt an, wie oft ein Rotorpol eine Referenzposition passiert. Besonders wird die 12. Harmonische der Frequenzgröße verwendet.

Als Lüfterschallfrequenz wird eine Grundfrequenz oder Harmonische des vom Lüfter erzeugten Schalls verwendet. Insbesondere ist die Lüfterschallfrequenz $f_L$ eine Blattpassierfrequenz. Die Lüfterschallfrequenz $f_L$ wird insbesondere in Abhängigkeit von der Lüfterdrehzahl $n_L$ und einer Anzahl an Lüfterrotorblättern $A_L$ bestimmt. Insbesondere wird die Lüfterschallfrequenz nach der Formel

$$f_L[Hz] = n_L \frac{[rpm]}{60} \cdot A_L$$

bestimmt.

Die Frequenzgröße des Generators, ist somit eine physikalisch auftretende Frequenz am Generator, die den Schall beeinflusst. Die Frequenz, mit der sich der Generator mechanisch dreht, kann z.B. eine solche Frequenzgröße sein. Bevorzugt ist die Frequenzgröße die Polpassierfrequenz.

Mit der Polpassierfrequenz wird die Frequenz bezeichnet, mit der an einem frei wählbaren Referenzpunkt ein Rotorpol vorbeiläuft. Sie entspricht somit, je nach Anzahl an Rotorpolen des Rotors, einem Vielfachen einer aktuellen Drehfrequenz des Rotors.

Durch das wiederholende Passieren des Referenzpunktes bzw. eines anderen Punktes wird Schall mit der Generatorschallfrequenz erzeugt.

Auch wurde erkannt, dass die halbe Polpassierfrequenz eine solche Frequenzgröße sein kann, die den Schall beeinflusst. Hier wurde erkannt, dass der Schall von einem Zusammenspiel zwischen Rotor und Stator abhängt, und damit von der Magnetisierung jedes Rotorpols abhängen kann. Es wird daher auch besonders vorgeschlagen, als Generatorschallfrequenz eine Harmonischen der halben Polpassierfrequenz zu verwenden. Relevant bei der halben Polpassierfrequenz ist, wie oft ein Referenzpunkt von jedem zweiten Pol passiert wird. Hier liegt zu Grunde, dass zwei benachbarte Pole unterschiedlich magnetisiert sind. Die Magnetisierung führt zu einer starken Wechselwirkung zwischen Rotor und Stator, die für das Wirkprinzip des Generators und damit die Stromerzeugung natürlich essentiell ist, die aber auch Einfluss auf die Geräuschentwicklung bzw. Schallerzeugung haben kann. Wegen dieser wechselnden Magnetisierung bzw. Magnetisierungsrichtung von einem Pol zum nächsten, kann daher statt der Polpassierfrequenz die halbe Polpassierfrequenz relevant sein. Vereinfachend kann hier für die Berechnung auch die Anzahl Polpaare, statt Anzahl Pole, verwendet werden.

Die Frequenzgröße und damit auch die Generatorschallfrequenz wird somit durch die Konstruktion des Generators bedingt bzw. bestimmt. Zudem sind Frequenzgröße und Generatorschallfrequenz abhängig von der Rotordrehzahl.

Konstruktionsbedingt weist ein Generator mehrere Nuten im Stator, also Statornuten, mit entsprechender Statorwicklung auf. Die Statornuten können somit vereinfacht auch nur als Nuten bezeichnet werden. Bei einem 6-phasigen Generator sind z.B. sechs Statornuten pro Rotorpol gegeben. Pro Polpaar, bestehend aus je zwei Rotorpolen, weist der Generator somit 12 Statornuten auf. Eine Ordnung k der Harmonischen entspricht dabei der Anzahl Statornuten pro Polpaar. In dem Beispiel ist die Ordnung somit k = 12. Die charakteristische Generatorschallfrequenz ist dann also die 12. Harmonische zur halben Polpassierfrequenz. Entscheidend für die charakteristische Generatorschallfrequenz ist somit besonders die Anzahl der Nuten des Generators. Als weitere wichtige Harmonische wurden unter anderem die 6. und 18. Harmonische erkannt, besonders bezogen auf die halbe Polpassierfrequenz.

Mit der Anzahl an Polpaaren $P_G$ des Generators und der Rotordrehzahl $n_R$ bestimmt sich die charakteristische Generatorschallfrequenz somit zu

$$f_G[Hz] = n_R \frac{[rpm]}{60} \cdot P_G \cdot k \, .$$

Auch der Lüfter erzeugt konstruktionsbedingt einen Schall, sodass die Lüfterschallfrequenz von der Konstruktion des Lüfters abhängt. Bevorzugt ist die Lüfterschallfrequenz die Blattpassierfrequenz, die angibt, wie oft ein Lüfterrotorblatt des Lüfters einen gewählten Referenzpunkt pro Sekunde passiert. Das Passieren der Lüfterrotorblätter erzeugt ein vibrierendes Geräusch mit der Blattpassierfrequenz. Es ist aber auch möglich, dass Harmonische, also ganzzahlige Vielfache der Blattpassierfrequenz, im Spektrum dominieren und als Lüfterschallfrequenz berücksichtigt werden.

Gemäß einem weiteren Aspekt wird die Lüfterdrehzahl des wenigstens einen Lüfters so vorgegeben, dass die zugehörige Lüfterschallfrequenz maximal um eine vorgebbare Maskierungsabweichung von der Generatorschallfrequenz abweicht, um die Generatorschallfrequenz zu maskieren.

Die resultierende Lüfterschallfrequenz ist somit verschieden von der Generatorschallfrequenz, jedoch immer noch in einem Bereich der Generatorschallfrequenz. Dabei wird die Maskierungsabweichung so vorgegeben, dass Generatorschall und Lüfterschall nicht als unterschiedliche Töne wahrgenommen werden können. Es wird also erreicht, dass eine Frequenzbreite des Generatorschalls bei der charakteristischen Generatorschallfrequenz verbreitert wird. Der resultierende Schall weist dann keinen scharfen Peak mehr bei der Generatorschallfrequenz auf und wird als weniger unangenehm wahrgenommen.

Die Maskierung der Generatorschallfrequenz erfolgt dabei in Abhängigkeit von einem absoluten Geräuschpegel des resultierenden Gesamtschalls. Beispielsweise kann es im unteren Drehzahlbereich des Rotors ungünstig sein, die Maskierung vorzunehmen. Besonders wenn die Kühlwirkung im Vordergrund steht, wird eine Maskierung der Generatorschallfrequenz nicht durchgeführt.

Gemäß einem weiteren Aspekt wird die kritische Lüfterdrehzahl $n_{L,i}$ für jeden Lüfter $i$ bestimmt in Abhängigkeit von der Rotordrehzahl $n_R$, eine Anzahl Polpaare $P_G$ des Generators, einer oder der Anzahl an Lüfterrotorblättern $A_{L,i}$ des Lüfters $i$ und eine Ordnung $k$ des vom Generator erzeugten Schalls. Die Ordnung k ist eine kennzeichnende Ordnung des Generators und/oder kann als Ordnung der Harmonischen betrachtet werden, die als Generatorschallfrequenz verwendet wird. Insbesondere oder alternativ kann sie den Wert 6, 12 oder 18 aufweisen. Dafür kann somit die 6., 12. bzw. 18. Harmonischen die Generatorschallfrequenz sein. Bevorzugt kennzeichnet die Ordnung k eine Anzahl an Nuten, also Statornuten, pro Polpaar. Die Ordnung k kann dann dem doppelten Wert der Anzahl Phasen des Generators entsprechen, also gerade einer Anzahl an Nuten pro Polpaar. Im Falle eines 6-phasigen Generators, beträgt die Ordnung dann 12 (k=12).

Es wurde besonders erkannt, dass die Anzahl Polpaare, also des Läufers, zusammen mit der Anzahl Phasen des Generators, nämlich des Stators, zusammen mit der Rotordrehzahl die Generatorschallfrequenz bestimmen. Je nach Rotordrehzahl kann damit auf einfache Art und Weise eine kritische, also zu vermeidende Lüfterdrehzahl bestimmt werden. Eine entsprechend angepasste Lüfterdrehzahl kann somit auf einfache Art und Weise bestimmt und eingestellt werden.

Die kritische Lüfterdrehzahl wird dann bestimmt als

$$ n_{L,i} = \frac{n_R \cdot k \cdot P_G}{A_{L,i}} $$

Die kritische Lüfterdrehzahl lässt sich also bestimmen durch Gleichsetzen der Lüfterschallfrequenz $f_L$ und Generatorschallfrequenz $f_G$ und Umstellen nach der Lüfterdrehzahl.

Die einzustellende Lüfterdrehzahl jedes Lüfters soll somit von dieser kritischen Lüfterdrehzahl abweichen, insbesondere außerhalb eines vorgebbaren Bereiches um die kritische Lüfterdrehzahl liegen. Dadurch wird erreicht, dass die sich einstellende charakteristische Lüfterschallfrequenz von der charakteristischen Generatorschallfrequenz verschieden ist.

Gemäß einem weiteren Aspekt weist die Windenergieanlage mehrere Lüfter zum Kühlen der Gondel und/oder des Generators auf. Die Lüfter sind jeweils in ihrer Lüfterdrehzahl einstellbar und erzeugen jeweils einen Schall mit einer von ihrer Lüfterdrehzahl abhängigen charakteristischen Lüfterschallfrequenz. Jede der Lüfterdrehzahlen wird, jeweils in Abhängigkeit von der Rotordrehzahl, so eingestellt, dass ihre Lüfterschallfrequenz von der Generatorschallfrequenz abweicht. Bevorzugt werden die Lüfterdrehzahlen so eingestellt, dass sich ihre Lüfterschallfrequenzen auch untereinander unterscheiden.

Dabei wurde erkannt, dass auch die Lüfter Schall mit charakteristischer Lüfterschallfrequenz erzeugen können, die sich ungünstig überlagern können. Dies wäre zum Beispiel der Fall, wenn jedem, insbesondere baugleichen, Lüfter dieselbe Lüfterdrehzahl vorgegeben werden würde und somit alle Lüfter einen Peak im Schallspektrum bei derselben Lüfterschallfrequenz aufweisen würden. Durch die Überlagerung würde die Amplitude des resultierenden Schalls bei der Lüfterschallfrequenz weiter aus dem Grundspektrum herausragen, als es für jeden Lüfter einzeln betrachtet der Fall wäre. Gerade dies gilt es zu vermeiden, da ein stark ausgeprägter Peak im Grundspektrum als unangenehm wahrgenommen wird. Baugleiche Lüfter werden daher mit unterschiedlichen Lüfterdrehzahlen eingestellt.

Dabei erfolgt dies ebenfalls in Abhängigkeit von der Rotordrehzahl, da weiterhin auch die Generatorschallfrequenz von den Lüftern zu vermeiden ist.

Weiterhin wurde erkannt, dass durch unterschiedlich eingestellte Lüfterdrehzahlen, und damit insbesondere resultierende verschiedene Lüfterschallfrequenzen der Effekt der Maskierung des Generatorschalls verstärkt werden kann und die Lüfter sich auch gegenseitig maskieren können. Es werden somit alle Lüfter zum Maskieren der Generatorschallfrequenz eingesetzt.

Jeder Lüfterschall sowie der Generatorschall weisen also bei der jeweiligen Lüfterschallfrequenz bzw. Generatorschallfrequenz einen Peak mit einer gewissen Frequenzbreite auf. Durch Einstellen der Lüfterdrehzahl soll erreicht werden, dass diese resultierenden Peaks am Rand der Frequenzbreite leicht überlappen und derart überlagern. Durch geeignete Wahl der Lüfterschallfrequenzen wird erreicht, dass sich ein Plateau in der Amplitude des Schalls einstellt, welches sich über einen breiteren Frequenzbereich erstreckt als die einzelnen Peaks des Generatorschalls bzw. Lüfterschalls. Effektiv wird so die Frequenz des Generatorschalls verbreitert.

Dadurch, dass alle Lüfterschallfrequenzen sowie die Generatorschallfrequenzen voneinander verschieden sind, kann die Amplitude des Plateaus gleichzeitig niedrig gehalten werden.

Gemäß einem weiteren Aspekt wird wenigstens ein Frequenzabstand als Frequenzdifferenz zwischen jeweils zwei Lüfterschallfrequenzen zweier Lüfter vorgegeben. Die Lüfterdrehzahlen der Lüfter werden in Abhängigkeit von dem Frequenzabstand so eingestellt, dass Lüfterschallfrequenzen wenigstens zweier Lüfter zueinander den Frequenzabstand aufweisen.

Der Frequenzabstand wird also vorgegeben, um ungünstige Überlagerung des Schalls zweier Lüfter zu vermeiden. Die jeweiligen Lüfterdrehzahlen werden also so eingestellt, dass die Lüfter jeweils einen Schall mit unterschiedlicher Lüfterschallfrequenz erzeugen.

Das Spektrum des Schalls des jeweiligen Lüfters weist somit einen Peak mit einer gewissen Frequenzbreite bei der jeweiligen Lüfterschallfrequenz auf. Der wenigstens eine Frequenzabstand wird dabei so klein gewählt, dass eine Überlappung des Frequenzbereiches des einen Lüfters mit dem Frequenzbereich des anderen Lüfters gegeben ist. Jedoch wird der Frequenzabstand gleichzeitig so groß gewählt, dass die resultierende Amplitude des Schalls klein bleibt. Dadurch wird einerseits eine ungünstige Überlagerung mit zu hohen resultierenden Schallpegeln vermieden, und andererseits eine Maskierung erreicht, sodass die Schallsignale der Lüfter nicht als unterschiedliche Töne wahrgenommen werden.

Gemäß einem weiteren Aspekt ist der Frequenzabstand als Frequenzdifferenz zwischen jeweils zwei Lüfterschallfrequenzen zweier Lüfter variabel einstellbar. Alternativ oder ergänzend ist der Frequenzabstand zwischen den Lüftern zueinander unterschiedlich. Bevorzugt wird der Frequenzabstand in Abhängigkeit von wenigstens einem Wetterparameter gewählt aus der Liste umfassend eine Außentemperatur, eine Luftfeuchtigkeit, einen atmosphärischen Luftdruck, eine Niederschlagsrate, eine Tröpfchengröße, eine Schneefallrate und eine Windgeschwindigkeit.

Es wurde erkannt, dass der Generatorschall besonders effektiv maskiert werden kann, wenn die Lüfterschallfrequenzen nicht alle denselben Abstand zueinander haben. Der Frequenzabstand zwischen dem ersten und zweiten Lüfter beträgt dann zum Beispiel ein Hertz, zwischen dem zweiten und dritten Lüfter hingegen bspw. zwei Hertz, usw..

Durch die ungleichen Abstände der Lüfterschallfrequenzen kann das resultierende Frequenzspektrum ein Plateau aufweisen. Damit werden lokale Frequenzspitzen vermieden, die bei immer gleichen Abständen zwischen jeweils zwei Lüfterschallfrequenzen, auftreten können. Es können sich andernfalls mehrere Peaks im Spektrum ergeben, die als Einzeltöne wahrnehmbar sind und als störend empfunden werden können.

Das wird durch die ungleichen Abstände der Lüfterschallfrequenzen vermieden. Durch die ungleichen Abstände der Lüfterschallfrequenzen können einige dieser Abstände auch klein gewählt werden, sodass insgesamt ein schmaleres resultierendes Spektrum erreicht werden kann, also ein schmaleres Plateau, wodurch zu geringe Drehzahlen und daher eine zu schlechte Kühlleistung vermieden werden. Der variable Frequenzabstand erlaubt somit, eine hohe mittlere Kühlleistung zu erzielen bei gleichzeitig niedriger Amplitude des resultierenden Schalls. Mit einem festen Frequenzabstand zwischen allen Lüftern ist diese Flexibilität der Optimierung über Variation einzelner Frequenzabstände nicht gegeben.

Durch Simulationen und/oder Experimente können geeignete Lüfterdrehzahlen gefunden werden, die zu Lüfterschallfrequenzen führen, die im resultierenden Schall einen breiten Frequenzbereich mit einem Plateau niedriger Schallamplitude aufweisen.

Insbesondere wurde auch erkannt, dass auch Wetterparameter Einfluss auf die Schallfrequenz der Lüfter, ihre Wahrnehmung und/oder ihre Ausbreitung haben.

Besonders haben die Wetterparameter dadurch auch einen Einfluss auf den zu wählenden Frequenzabstand zwischen zwei Lüftern und insbesondere auf die einzustellende Lüfterdrehzahl der jeweiligen Lüfter. Entscheidend ist dabei wie das Spektrum des Schalls am Immissionsort aussieht, also wie der Schall am Immissionsort wahrgenommen wird. Daher müssen die Lüfterschallfrequenzen so vorgegeben werden, dass eine Verbreiterung des Lüftertons am Immissionsort erreicht wird.

Dabei wurde erkannt, dass eine Schallausbreitung des resultierenden Schalls mit sinkender Außentemperatur stärker gedämpft wird. Bei niedrigeren Temperaturen ist daher die Amplitude des Schalls am Immissionsort geringer, so dass auch eine Schallerzeugung mit höherer Amplitude gewährbar ist. Die Lüfterdrehzahlen können dann für eine bessere Kühlwirkung eingestellt werden.

Auch die Luftfeuchtigkeit hat Einfluss auf die Schallausbreitung. Je feuchter die Luft, desto besser kann sich der Schall ausbreiten. Je feuchter die Luft, desto größer wird der Frequenzabstand zwischen den Lüftern somit gewählt, um ein möglichst niedriges Schallplateau zu erzielen. Je trockener die Luft, desto unkritischer ist ein hoher Schallpegel und die Lüfter können zur optimalen Kühlung eingestellt werden.

Ebenso ist bei einem höheren atmosphärischen Luftdruck von einer höheren Schallwahrnehmung auszugehen. Je höher der Luftdruck, desto wichtiger ist eine schalloptimierte Einstellung der Frequenzabstände.

Bei einer hohen Niederschlagsrate ist die Schallimmission am Immissionsort bereits erhöht. Eine hohe Schallimmission durch die Windenergieanlage ist daher weniger kritisch. In diesem Fall kann auch der Frequenzabstand geringer gewählt werden und die Lüfter zu einer optimalen Kühlung eingesetzt werden.

Auch eine Tröpfchengröße, also bei Regen, hat eine Auswirkung auf die Schallimmission. Je größer die Tröpfchen, desto lauter wird der Umgebungslärm durch den Niederschlag. Auch in diesem Fall können die Frequenzabstände somit freier gewählt werden.

Bei Schneefall wird durch die Schneemassen der Schall zudem gedämpft. Mit zunehmendem Schneefall kann somit der Frequenzabstand kleiner gewählt werden.

Die Windgeschwindigkeit und/oder Windrichtung haben ebenfalls Auswirkung auf die Schallausbreitung. Je nach Windrichtung wird der Schall zum Immissionsort hingetrieben oder weggetragen. Weiter wird bei höheren Windgeschwindigkeiten der Schall noch in größeren Distanzen wahrgenommen. Eine schalloptimierte Einstellung der Frequenzabstände ist somit dann zu wählen, wenn die Windrichtung zum Immissionsort zeigt und/oder die Windgeschwindigkeit hoch ist.

Gemäß einem weiteren Aspekt ist der Frequenzabstand als Frequenzdifferenz zwischen jeweils zwei Lüfterschallfrequenzen zweier Lüfter variabel einstellbar. Mit größerem Abstand zur Generatorschallfrequenz nimmt der Frequenzabstand zwischen den Lüftern ab.

Das hat den Vorteil, dass hierdurch besonders effektiv ein Plateau in der Lautstärke des resultierenden Schalls erreicht wird, ohne dass sich durch den Lüfter mit größtem Frequenzabstand zur Generatorschallfrequenz ein Peak bildet.

Gemäß einem weiteren Aspekt wird der Frequenzabstand als Frequenzdifferenz zwischen jeweils zwei Lüfterschallfrequenzen zweier Lüfter in Abhängigkeit von der Rotordrehzahl vorgegeben. Der Frequenzabstand wird umso geringer vorgegeben, je geringer die Rotordrehzahl ist.

Dabei wurde erkannt, dass mit niedrigerer Rotordrehzahl auch die Amplitude des Generatorschalls abnimmt. Der Schall wird somit insgesamt leiser. Das hat auch zur Folge, dass der Schall insgesamt als weniger störend wahrgenommen wird. Es ist dann auch möglich die Frequenzabstände geringer zu wählen. Die Lüfter können dann eine bessere Kühlwirkung erzielen.

Es wurde auch erkannt, dass sich bei geringerer Rotordrehzahl durch den niedrigeren Schallpegel oftmals eine geringere Frequenzbreite des Lüfterschalls einstellt, besonders wenn der Frequenzrand durch einen Schallpegel festgelegt wird. Auch aus diesem Grund können die Frequenzabstände bei niedrigerer Rotordrehzahl geringer gewählt werden.

Gemäß einem weiteren Aspekt weist die Generatorschallfrequenz eine Tonbreite, insbesondere eine ERB-Breite auf. Die Tonbreite definiert einen charakteristischen Frequenzbereich um die Generatorschallfrequenz.

In Abhängigkeit von der Tonbreite wird ein zu vermeidender Frequenzbereich mit einer Vermeidungsbreite bestimmt. Die Vermeidungsbreite definiert den zu vermeidenden Frequenzbereich als Frequenzbereich um die Generatorschallfrequenz. Die Vermeidungsbreite ist kleiner als die Tonbreite, sodass der zu vermeidende Frequenzbereich innerhalb des charakteristischen Frequenzbereichs liegt. Die Lüfterdrehzahl jedes Lüfters wird so eingestellt, dass die Lüfterschallfrequenz außerhalb des zu vermeidenden Frequenzbereiches und/oder innerhalb des charakteristischen Frequenzbereiches liegt.

Es wird dabei berücksichtigt, dass abhängig von der Tonfrequenz eine Region auf der Basilarmembran im Ohr eines Menschen angeregt wird, welche als Bandpassfilter aufgefasst werden kann. Die Breite des Bandpasses variiert mit der Frequenz. Der maskierende Schall sollte innerhalb des Bandpasses liegen, um eine effektive Maskierung zu erzielen.

Die Tonbreite wird nun verstanden als die Bandbreite, die ein solcher theoretischer Bandpassfilter der Basilarmembran im Ohr bei der Generatorschallfrequenz aufweist. Die Tonbreite ist somit abhängig von der Generatorschallfrequenz.

Insbesondere wird als Tonbreite die ERB-Breite verwendet, wobei ERB eine Abkürzung für Equivalent Rectangular Bandwidth bzw. äquivalente Rechteckbandbreite ist. In der Psychoakustik beschreibt die ERB-Breite eine Näherung der Bandbreite der Filter des menschlichen Gehörs. Dabei werden die Filter vereinfachend als rechteckig angenommen.

Es wurde nun erkannt, dass zur Maskierung des Generatorschalls ein Hintergrundgeräusch innerhalb des charakteristischen Frequenzbereiches liegen muss, den die Tonbreite definiert.

Aus diesem Grund werden die Lüfter so eingestellt, dass die Lüfterschallfrequenz innerhalb des charakteristischen Frequenzbereichs liegen. Dabei wird der schmale Peak des Generatortons bei der Generatorschallfrequenz verbreitert und als weniger unangenehm wahrgenommen.

Dies soll zumindest bis zu einer maximalen Drehzahl des Lüfters und damit maximalen Lüfterschallfrequenz erreicht werden.

Es wurde jedoch auch erkannt, dass die Drehzahl jedes Lüfters so eingestellt werden muss, dass eine ungünstige Superposition der Amplitudenmaxima des Lüfterschalls und des Generatorschalls vermieden wird.

Der resultierende Schall soll also nicht lauter werden, aber im Spektrum breiter. Dies wird durch den zu vermeidenden Frequenzbereich erreicht, in den die Lüfterschallfrequenz nicht fallen soll.

Gemäß einem weiteren Aspekt wird die Lüfterdrehzahl jeweils als Lüfterdrehzahl-Kennlinie vorgegeben. Die Lüfterdrehzahl-Kennlinie beschreibt eine Funktion der Lüfterdrehzahl in Abhängigkeit von der Rotordrehzahl. Insbesondere ist die Lüfterdrehzahl-Kennlinie als lineare Kennlinie vorgesehen.

Bei einer aktuellen Rotordrehzahl wird dann die Lüfterdrehzahl entsprechend der Lüfterdrehzahl-Kennlinie vorgegeben. Dies gewährleistet eine einfache Implementierung, da in einfacher Art und Weise die Lüfterdrehzahl anhand einer Kennlinie eingestellt werden kann, ohne explizit die resultierende Lüfterschallfrequenz bestimmen zu müssen.

Die Lüfterdrehzahl-Kennlinie kann dabei zuvor bestimmt werden. Dazu eignen sich Simulationen oder Experimente. Die Lüfterdrehzahl-Kennlinie kann aber auch berechnet werden.

Wird die Lüfterdrehzahl-Kennlinie zudem linear eingestellt, kann eine einfache Steuerung realisiert werden. Zudem hat es den Vorteil, dass unabhängig von der Rotordrehzahl die resultierenden Lüfterschallfrequenzen einen konstanten Frequenzabstand zu der Generatorschallfrequenz aufweisen können, je nach Wahl bzw. Steigung der Lüfterdrehzahl-Kennlinie.

Linear ist die Lüfterdrehzahl-Kennlinie insbesondere dann, wenn die Drehzahl des Lüfters $n_L$ sich durch die mit einem Faktor $m$ multiplizierte Rotordrehzahl $n_R$ berechnen lässt, wobei ein konstanter Offset $c$ berücksichtigt werden kann. Die Lüfterdrehzahl ließe sich dann zum Beispiel berechnen als

$$n_L = m \cdot n_R + c.$$

Gemäß einem weiteren Aspekt ist für jeden Lüfter eine eigene Lüfterdrehzahl-Kennlinie vorgesehen. Die Lüfterdrehzahl-Kennlinien mehrerer Lüfter weichen jeweils um ein vorgebbares Drehzahlabweichungskriterium voneinander ab.

Insbesondere ist vorgesehen, dass die Lüfterdrehzahl-Kennlinien mehrerer Lüfter um eine vorgebbare Differenzdrehzahl zueinander verschoben sind und/oder um einen Drehzahlabweichungsfaktor voneinander abweichen, der im Bereich von 0,8 bis 1,2 liegt.

Um zu erreichen, dass jeder Lüfter einen Lüfterschall mit unterschiedlicher Lüfterschallfrequenz erzeugt, wird somit jedem Lüfter eine unterschiedliche Lüfterdrehzahl-Kennlinie vorgegeben.

Dabei ist entscheidend, dass die resultierenden Lüfterschallfrequenzen wenigstens so weit auseinander liegen, dass eine Superposition, die die Lautstärke erhöht, vermieden wird. Das Drehzahlabweichungskriterium stellt somit sicher, dass die Lüfterdrehzahl zwischen zwei Lüftern wenigstens so weit auseinander liegen, dass die resultierenden Lüfterschallfrequenzen sich nicht ungünstig überlagern und zu einer höheren Amplitude führen.

Besonders einfach lässt sich das Drehzahlabweichungskriterium durch die Vorgabe einer Differenzdrehzahl erreichen. Die Differenzdrehzahl kann vorab bestimmt werden, als die Differenz, die zwei Lüfterdrehzahlen zueinander aufweisen, und die eingestellt werden muss, damit die Lüfter den Generatorschall einerseits optimal maskieren und andererseits sich die Lüfterschallsignale nicht ungünstig überlagern.

Alternativ oder ergänzend kann auch das Drehzahlabweichungskriterium als Drehzahlabweichungsfaktor vorgegeben werden. Die Lüfterdrehzahl-Kennlinie eines ersten Lüfters entspricht dann der Lüfterdrehzahl-Kennlinie eines zweiten Lüfters multipliziert mit dem Drehzahlabweichungsfaktor. Die Lüfterdrehzahl-Kennlinien werden dann relativ zueinander geneigt.

Besonders einfach lässt sich das Drehzahlabweichungskriterium auch durch Vorgabe einer Leistungsdifferenz realisieren. Die Leistung eines Lüfters wird dann z.B. um 1% niedriger eingestellt als ein anderer Lüfter. Statt 100% Lüfterleistung wird der Lüfter dann auf 99% seiner möglichen Leistung eingestellt.

Alternativ oder ergänzend ist vorgesehen, dass zu den Lüfterdrehzahl-Kennlinien zugehörige Lüfterschallfrequenz-Kennlinien mehrerer Lüfter, die jeweils eine Lüfterschallfrequenz in Abhängigkeit von der Rotordrehzahl beschreiben, jeweils um ein vorgebbares Frequenzabweichungskriterium voneinander abweichen.

Insbesondere ist vorgesehen, dass die Lüfterschallfrequenz-Kennlinien mehrerer Lüfter um eine vorgebbare Differenzfrequenz zueinander verschoben sind und/oder um einen Frequenzabweichungsfaktor, der dem Drehzahlabweichungsfaktor entsprechen kann, voneinander abweichen, der im Bereich von 0,8 bis 1,2 liegt.

Anstatt direkt die Drehzahl vorzugeben, ist es auch möglich, die Lüfterschallfrequenz, die sich bei einer gegebenen Rotordrehzahl einzustellen hat, vorzugeben. Dazu eignet sich besonders die Lüfterdrehzahl-Kennlinie, die jeder Rotordrehzahl eine sich einzustellende Lüfterschallfrequenz des Lüfters zuordnet.

Um eine geeignete Maskierung zu ermöglichen und um eine ungünstige Überlagerung der Lüfterschallsignale zu vermeiden, wird auch hier jedem Lüfter eine unterschiedliche Lüfterdrehzahl-Kennlinie zugeordnet. Dabei stellt das Frequenzabweichungskriterium sicher, dass die Lüfterschallfrequenzen der Lüfter sich nicht so überlagern, dass die Amplitude des resultierenden Schalls erhöht wird. Zudem wird beachtet, dass eine Maskierung des Generatorschalls erreicht werden soll. Die Berücksichtigung kann direkt über die jeweils zugehörigen Lüfterschallfrequenz-Kennlinien erfolgen.

Einfach lässt sich das Frequenzabweichungskriterium dadurch umsetzen, dass den Lüfterschallfrequenz-Kennlinien die Differenzfrequenz vorgegeben wird. Jede Lüfterschallfrequenz weicht somit um die Differenzfrequenz zu der Lüfterschallfrequenz des nächsten Lüfters ab.

Es wurde erkannt, dass eine bevorzugte Differenzfrequenz zwischen 2 Hz und 5 Hz liegt, besonders bevorzugt um 3,5 Hz liegt.

Alternativ oder ergänzend ist auch hier vorgesehen, den Frequenzabweichungsfaktor vorzugeben, der angibt, wie weit die Lüfterschallfrequenz-Kennlinien relativ zueinander verschoben sind.

Es ist auch möglich, den Lüftern sowohl die Lüfterdrehzahl-Kennlinien als auch die Lüfterschallfrequenz-Kennlinien vorzugeben. Dann wird die Drehzahl eines Lüfters zum Beispiel in erster Linie anhand der Lüfterdrehzahl-Kennlinie eingestellt und die Lüfterschallfrequenz-Kennlinien können zur Überprüfung verwendet werden. Wird erkannt, dass die resultierende Lüfterdrehzahl um einen vorgebbaren Wert von der zugehörigen Lüfterschallfrequenz-Kennlinie abweicht, kann entsprechend reagiert werden und die Lüfterdrehzahl gemäß der Lüfterschallfrequenz-Kennlinie korrigiert werden.

Gemäß einem weiteren Aspekt weist die Windenergieanlage wenigstens zwei Lüfter zum Kühlen der Gondel und/oder des Generators auf. Die Lüfter sind in einer Lüfterreihenfolge sortierbar. Die Lüfterdrehzahlen bzw. Lüfterdrehzahl-Kennlinien der Lüfter werden entsprechend der Lüfterreihenfolge ausgewählt. Ergänzend wird die Lüfterreihenfolge nach einer vorgebbaren Tauschzeit oder in Abhängigkeit von einem anderen Tauschkriterium verändert, sodass die Lüfterdrehzahlen bzw. Lüfterdrehzahl-Kennlinien der Lüfter entsprechend der veränderten Lüfterreihenfolge neu ausgewählt werden.

Die Idee ist, die Kühlleistung jedes Lüfters möglichst gleich hoch zu halten. Wird die Lüfterdrehzahl eines Lüfters reduziert, sinkt auch seine Kühlleistung. Werden die Lüfter also mit unterschiedlicher Lüfterdrehzahl betrieben, wird auch ihre Kühlleistung voneinander verschieden sein. Der eine Lüfter kühlt dann mehr als der andere und es kommt zu einer ungleichmäßig verteilten Kühlwirkung und/oder einer unterschiedlichen Abnutzung der Lüfter.

Es wurde erkannt, dass es daher sinnvoll sein kann, die Drehzahlen der Lüfter untereinander durchzutauschen, sodass die Kühlwirkung gleichmäßiger verteilt werden kann.

Dadurch werden im Wechsel immer unterschiedliche Lüfter mit der höchsten, niedrigsten und anderen Drehzahl betrieben. Es kann auch durch das Durchtauschen der Lüfterdrehzahlen ein Wirkungsgrad der Lüfter verbessert werden.

Dazu können die Lüfter durchnummeriert und anhand der Lüfterreihenfolge sortiert werden. Die Lüfterdrehzahlen bzw. Lüfterdrehzahl-Kennlinien können in wechselnder Weise den Lüftern speziell zugeordnet werden. Eine Möglichkeit einer einfachen Umsetzung ist, sie für die Zuordnung der einzustellenden Lüfterdrehzahl gemäß der Lüfterreihenfolge auszuwählen. Hier wird besonders davon ausgegangen, dass die Lüfter baugleich sind, zumindest gleiche Drehzahlbereiche aufweisen.

Nach Ablauf der Tauschzeit werden die Lüfter neu sortiert werden. Dadurch wird effektiv jedem Lüfter eine neue Lüfterdrehzahl bzw. Lüfterdrehzahl-Kennlinien zugeordnet.

Alternativ wird das Tauschkriterium vorgegeben. Dabei kann z.B. die Lüfterreihenfolge verändert werden, wenn eine gewünschte Kühltemperatur im Bereich eines Lüfters nicht mehr erreicht wird. Ein weiteres Kriterium könnte durch die Leistung der Lüfter vorgegeben werden.

Gemäß einem weiteren Aspekt weist die Windenergieanlage wenigstens eine weitere Geräuschquelle auf und die wenigstens eine weitere Geräuschquelle erzeugt weiteren Schall mit jeweils konstanter Frequenz. Die Lüfterdrehzahl des wenigstens einen Lüfters wird so eingestellt, dass die Lüfterschallfrequenz von der konstanten Frequenz abweicht.

Eine solche Geräuschquelle ist beispielsweise ein Transformator der Windenergieanlage.

Ein Vorteil, der sich daraus ergibt, ist, dass sich der Lüfterschall und der Schall der weiteren Geräuschquelle nicht so überlagern, dass es zur Erhöhung der Amplitude des Gesamtschalls führt. Mit anderen Worten wird auch gleichzeitig der Schall der Geräuschquelle maskiert, was ein positiver Effekt ist.

Ein weiterer Vorteil ist, dass der Schall der weiteren Geräuschquelle bereits zur Maskierung des Generatorschalls beiträgt. Er trägt also zur Verbreiterung der Generatorschallfrequenz bei. Dies kann ausgenutzt werden, indem die Lüfterdrehzahl unter Vermeidung einer konstanten Frequenz eingestellt wird. Die Generatorfrequenz kann dadurch sogar noch weiter verbreitert werden.

Erfindungsgemäß wird auch eine Windenergieanlage nach Anspruch 15 vorgeschlagen.

Die Windenergieanlage umfasst eine Gondel und einen Generator mit einem in seiner Drehzahl einstellbaren Rotor, wobei der Rotor wenigstens ein Rotorblatt aufweist. Der Generator erzeugt Schall mit wenigstens einer von der Rotordrehzahl abhängigen charakteristischen Generatorschallfrequenz.

Die Windenergieanlage weist wenigstens einen Lüfter zum Kühlen der Gondel und/oder des Generators auf. Der wenigstens eine Lüfter ist in einer Lüfterdrehzahl einstellbar, wobei der wenigstens eine Lüfter Schall mit einer von der Lüfterdrehzahl abhängigen charakteristischen Lüfterschallfrequenz erzeugt.

Vorzugsweise kann eine Schallemission erfasst werden, insbesondere durch ein Mikrofon. Die Erfassung kann entbehrlich sein, wenn die erwartbare Schallemission aus Einstellungen der Windenergieanlage, insbesondere der Generatordrehzahl und/oder einer Generatorleistung bekannt oder ableitbar ist. Die Windenergieanlage weist auch ein Steuermodul auf.

Zur Veränderung der Schallemission stellt das Steuermodul eine Lüfterdrehzahl des wenigstens einen Lüfters in Abhängigkeit von der Rotordrehzahl so ein, dass die Lüfterschallfrequenz von der wenigstens einen Generatorschallfrequenz abweicht. Insbesondere wird die Lüfterdrehzahl des wenigstens einen Lüfters nach einem vorstehenden Aspekt eingestellt. Die vorstehenden Erläuterungen zum erfindungsgemäßen Verfahren gelten für die Windenergieanlage entsprechend.

Die Erfindung wird nachfolgend unter Bezugnahme auf die begleitenden Figuren beispielhaft näher erläutert.

Figur 1    zeigt eine Windenergieanlage in perspektivischer Ansicht.

Figur 2    zeigt beispielhaft ein Spektrum einer Windenergieanlage bei unterschiedlichen Drehzahlen.

Figur 3    zeigt eine drehzahlabhängige Generatorschallfrequenz.

Figur 4    zeigt ein Diagramm mehrerer überlagerter Schallsignale.

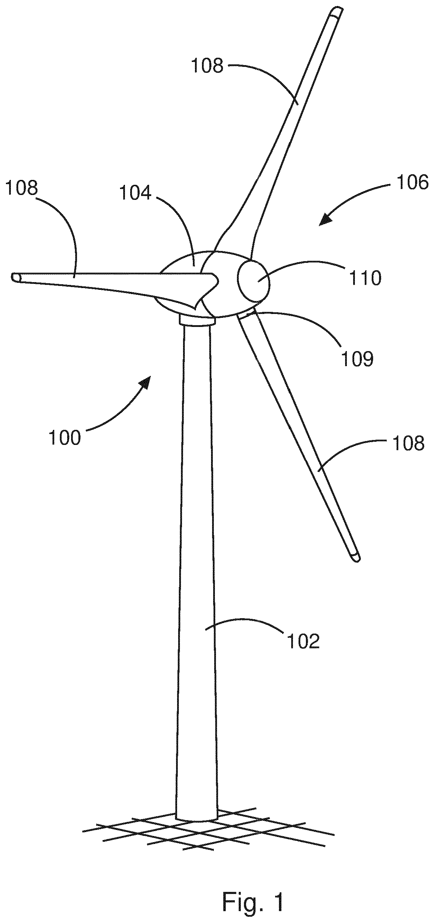

**Figur 1** zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Blattwinkel der Rotorblätter 108, die synonym auch als Pitchwinkel oder Einstellwinkel bezeichnet werden können, können durch Pitchmotoren an den Rotorblattwurzeln 109 der jeweiligen Rotorblätter 108 verändert werden.

Die Windenergieanlage weist auch vier Rückkühllüfter zum Kühlen des Generators auf.

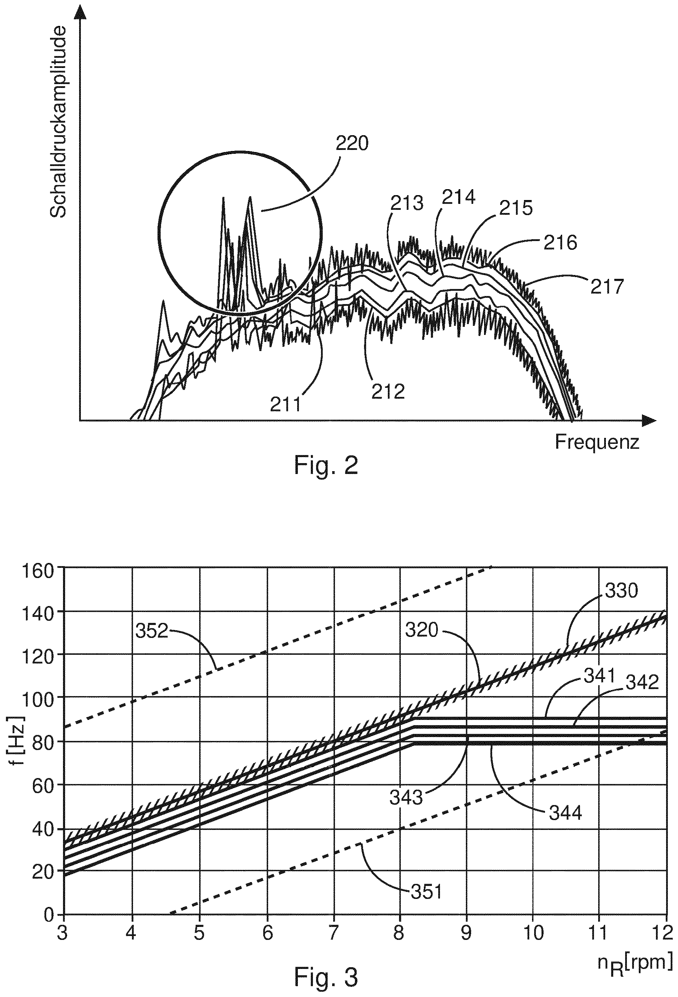

**Figur 2** zeigt ein Koordinatensystem, in dem jeweils eine Schalldruckamplitude von Schallsignalen in Abhängigkeit von einer Frequenz dargestellt wird. In dem Koordinatensystem sind beispielhaft sieben real aufgenommene Spektren 211, 212, 213, 214, 215, 216, 217 der Windenergieanlage bei unterschiedlichen Rotordrehzahlen dargestellt.

In jedem der Spektren 211, 212, 213, 214, 215, 216, 217 ist ein Peak erkennbar, der merklich aus dem umgebenden Grundspektrum herausragt. Der Peak ist ein konstruktionsbedingter Generatorton 220, der bei der Generatorschallfrequenz liegt, und ist zur Verdeutlichung umkreist.

Je weiter der Generatorton 220 aus dem Grundspektrum herausragt, desto unangenehmer wird der Schall wahrgenommen. Es soll somit verhindert werden, dass die Amplitude des Peaks bei der Generatorschallfrequenz noch zusätzlich erhöht wird. Dazu wird die Drehzahl des Lüfters so eingestellt, dass ein dominierender Ton im Schall des Lüfters eine Lüfterschallfrequenz aufweist, die von der Generatorschallfrequenz verschieden ist. Ein Frequenzbereich, der in Abhängigkeit von einer Frequenzbreite des Peaks, also des Generatortons 220 bei der Generatorschallfrequenz, bestimmt wird, wird also gemieden.

Der Lüfterschall ist im Koordinatensystem nicht dargestellt.

**Figur 3** zeigt ein Koordinatensystem, in dem Frequenz in Hz auf der Ordinate und Rotordrehzahl $n_R$ in rpm auf der Abszisse aufgetragen ist. Beispielhaft ist ein Ausschnitt von 3 rpm bis 12 rpm und 0 Hz bis 160 Hz dargestellt.

Eine charakteristische Generatorschallfrequenz 320 ist dargestellt. Mit zunehmender Rotordrehzahl nimmt auch die Generatorschallfrequenz zu. Ebenso ist ein zu vermeidender Frequenzbereich 330 um die Generatorschallfrequenz 320 dargestellt.

Auch die Lüfter der Windenergieanlage erzeugen einen Schall, der sich dem Generatorschall überlagert und jeweils eine charakteristische Lüfterschallfrequenz aufweist.

Dabei werden die Lüfter in ihrer Lüfterdrehzahl so eingestellt, dass sie eine kritische Lüfterdrehzahl vermeiden. Nämlich gerade die Drehzahl, die zu einem Lüfterschall mit Lüfterschallfrequenz gleich der Generatorschallfrequenz führen würde. Dabei wird auch hier ein zu vermeidender Drehzahlbereich bestimmt, damit die Lüfterschallfrequenz den zu vermeidenden Frequenzbereich 330 meidet. Dargestellt sind vier Lüfterschallfrequenzen 341, 342, 343, 344. Jede Lüfterdrehzahl wird somit so eingestellt, dass die Lüfterschallfrequenzen 341, 342, 343, 344 nicht im zu vermeidenden Frequenzbereich 330 liegen.

Weiterhin wurde erkannt, dass sich auch die Lüfterschallfrequenzen ungünstig überlagern können. Daher werden die Lüfterdrehzahlen auch so eingestellt, dass sich ihre Lüfterschallfrequenzen 341, 342, 343, 344 untereinander unterscheiden. Dabei wird den Lüftern ein Frequenzabstand vorgegeben, den zwei Lüfter zueinander aufweisen müssen. Eine ungünstige Überlagerung wird so vermieden.

Ein weiterer Aspekt, den die Figur 3 verdeutlichen soll, ist das Maskieren des Generatortons. Dabei soll der Peak, den der Generatorton im Spektrum aufweist, verbreitert werden, indem die Drehzahlen der Lüfter so eingestellt werden, dass die Lüfterschallfrequenzen 341, 342, 343, 344 in der Nähe der Generatorschallfrequenz 320 liegen.

Auch dazu ist vorgesehen, die Drehzahl der Lüfter so einzustellen, dass die Lüfterschallfrequenzen den Frequenzabstand zueinander aufweisen. Der Frequenzabstand wird somit so gewählt, dass der Generatorton maskiert wird.

In Figur 3 ist der Frequenzabstand dabei konstant. Es ist aber besonders auch vorgesehen, den Frequenzabstand zwischen den Lüftern unterschiedlich einzustellen. Dadurch können Lüfterschallfrequenzen und Generatorschallfrequenz optimal aufeinander abgestimmt werden.

Die vier Lüfterschallfrequenzen 341, 342, 343, 344 sind in der Figur somit als Lüfterschallfrequenz-Kennlinien vorgesehen, die zueinander verschoben sind. Es ist auch vorgesehen, den Lüfterschallfrequenz-Kennlinien jeweils eine Lüfterdrehzahl-Kennlinie vorzugeben, die zueinander verschoben sind und jeweils eine Maximaldrehzahl erreichen. Auch die Maximaldrehzahlen sind hier unterschiedlich und führen entsprechend zu einer maximalen Frequenz der Lüfterschallfrequenz-Kennlinien.

Figur 3 zeigt auch eine Tonbreite des Generatorschalls als ERB-Breite, nämlich ein unteres ERB-Limit 351 und ein oberes ERB-Limit 352.

Für die Maskierung des Generatortons mit Generatorschallfrequenz 320 ist vorgesehen, die Drehzahlen der Lüfter so vorzugeben, dass die Lüfterschallfrequenzen innerhalb des von der Tonbreite definierten Frequenzbereiches liegen, also oberhalb des unteren ERB-Limits 351 und unterhalb des oberen ERB-Limit 352. Dabei ist dies nur in einem gewissen Rahmen möglich, da die Lüfter eine Maximaldrehzahl aufweisen. Der Lüfter also dann bereits mit voller Leistung betrieben wird. Im Beispiel ist dies für den Lüfter mit Lüfterschallfrequenz 341 bei etwa 8,2 rpm der Rotordrehzahl erreicht. Weiterhin soll jedoch, der Frequenzabstand zwischen den Lüfterschallfrequenzen beibehalten werden.

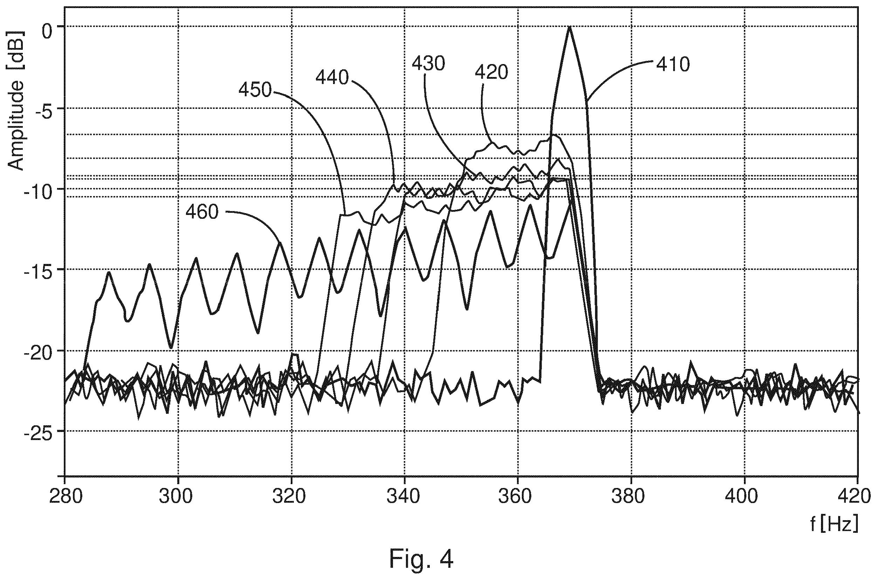

**Figur 4** zeigt ein weiteres Koordinatensystem, in dem eine Amplitude, nämlich eine Schalldruckamplitude, mehrerer Schallspektren in dB gegenüber einer Frequenz f in Hz aufgetragen ist. Dargestellt ist eine Simulation einer Überlagerung von Schallsignalen von zwölf Lüfterschallfrequenzen zwölf baugleicher Lüfter zu einem resultierenden Schallsignal mit Schallspektrum 410, 420, 430, 440, 450, 460. Für jede der resultierenden Schallspektren 410, 420, 430, 440, 450, 460 ist ein unterschiedlicher Frequenzabstand zwischen den Lüftern gewählt, um dadurch unterschiedliche Überlagerungen zu untersuchen. Dazu wird den zwölf Lüftern jeweils eine entsprechende (andere) Drehzahl vorgegeben. Für den Fall des überlagerten Schallspektrum 410 haben aber alle Lüfter dieselbe Drehzahl. Alternativ könnte aber auch statt einer Drehzahlvorgabe jeweils eine Leistung des Lüfters vorgegeben werden. Der Generatorschall wird in diesem Beispiel zur Vereinfachung der Erläuterung nicht berücksichtigt.

Beim überlagerten Schallsignal mit Schallspektrum 410 ist der Frequenzabstand zwischen allen Lüftern null, die Lüfter werden also alle mit derselben Drehzahl betrieben. Alle zwölf Lüfter werden also bei 100% ihrer Lüfternenndrehzahl eingestellt. Beim überlagerten Schallsignal mit Schallspektrum 420 unterscheidet sich die Drehzahl von Lüfter zu Lüfter um je 0,5%. Der Frequenzabstand ist somit konstant. Auch bei den Schallspektren 450 und 460 ist der Frequenzabstand konstant. Die Lüfterdrehzahlen variieren um je 1% bzw. 2% zwischen den Lüftern.

Die Schallspektren 430, 440 zeigen überlagerten Schall der zwölf Lüfter, bei dem die Frequenzabstände zwischen unterschiedlichen Lüftern unterschiedlich sind. Der Drehzahlunterschied zwischen den Lüftern ist somit nicht konstant, sondern variiert von Lüfter zu Lüfter.

Das resultierende Schallspektrum 410 sollte vermieden werden, denn hier überlagern sich die Schallsignale aller 12 Lüfter ungünstig übereinander zu dem Schall mit Schallspektrum 410 mit großem Peak. Der Peak hat eine schmale Breite bei großer Amplitude. Beides ist unerwünscht.

Auch ein Schallsignal mit Schallspektrum 460 ist zu vermeiden. Hier sind mehrere Peaks im Spektrum erkennbar, die als Einzeltöne wahrnehmbar sind und als störend empfunden werden können. Ein großer Frequenzabstand zwischen den Lüftern, der zudem zwischen den Lüftern konstant ist, führt zu einem Schallspektrum wie dem Schallspektrum 460. Bei solchen großen Frequenzabständen nimmt somit auch die Lüfterdrehzahl von Lüfter zu Lüfter stark ab. Dies ist unerwünscht, da dadurch die mittlere Kühlleistung der Gesamtheit aller Lüfter stark reduziert wird.

Hier zeigt sich auch ein weiterer Vorteil des variablen Frequenzabstandes. Die Amplituden der Schallspektren 430, 440 und 450 unterscheiden sich nur wenig voneinander. Jedoch ist der Frequenzbereich des Schallspektrums 450 merklich breiter als bei den Schallspektren 430, 440. Die Lüfterdrehzahl des langsamsten Lüfters ist somit beim resultierenden Schall mit den Spektren 430, 440 höher als beim resultierenden Schall mit Spektrum 450. Durch den variablen Frequenzabstand wird somit die mittlere Kühlleistung der Lüfter bei sonst annähernd gleichbleibender maximaler Amplitude erhöht

Es ist also ein Ziel, das resultierende Spektrum soweit über einen Frequenzbereich zu verbreitern, dass sich ein Plateau mit niedriger Amplitude einstellt. Dabei soll gleichzeitig der Frequenzbereich des Plateaus möglichst klein bleiben, sodass die mittlere Kühlleistung der Lüfter wenig reduziert wird. Dies ist besonders der Fall für die resultierenden Schallsignale mit Schallspektren 430 und 440 bei denen der Frequenzabstand individuell variiert.

Erfindungsgemäß wurden besonders die folgenden Aspekte und Lösungen erkannt.

Die Erfindung betrifft besonders die Verhinderung von ungünstigen Überlagerung von Schallanteilen unterschiedlicher Quellen von Komponenten der Windenergieanlage, bzw. eine aktive Maskierung von tonalen Komponenten mittels einer oder mehrerer Schallquellen. Als besonders relevant wurde der Schall des Generators und von einem oder mehreren Lüftern erkannt.

Die Erfindung betrifft auch einen Algorithmus, welcher eine ungünstige akustische Überlagerung von mehreren betriebsabhängigen (drehzahlabhängigen) Schallquellen einer Windenergieanlage verhindern soll. Eine weitere Funktion soll die gezielte Maskierung durch "Anfahren" bzw. "Ansteuern" eines bestimmten Drehzahlbereichs und/oder Frequenzbereichs einer Schallquelle sein, um die bestmöglichste "Maskierung" eines Tones (meistens vom Generator) zu erreichen.

Die Idee wird anhand des Beispiels von Generator und Rückkühllüfter beschrieben:
Generatoren strahlen konstruktivbedingt einen Ton ab, welcher von der Drehzahl abhängig ist. Dies ist meistens die 12. Harmonische, wie erkannt wurde.

Bei einer Schallmessung nach DIN 61400-11 wird in der Tonanalyse geschaut, wie stark der Ton aus dem restlichen benachbarten Spektrum "heraussticht". Der Frequenzbereich in dem die Analyse stattfindet, hängt von der Frequenz des Tones ab und basiert auf psychoakustischen Erkenntnissen.

Bei hohen Tonpegeln relativ zum umgebenden Spektrum kann es zu einem Tonzuschlag (KTN > 0) kommen, was zur Nichteinhaltung der Garantien und dadurch zu Kompensationskosten führen kann. In der Gondel der Windenergieanlage gibt es nun weitere zusätzliche Schallquellen, welche sich dem Schall vom Generator überlagern.

Eine Rückkühleinheit mit vier großen Lüftern, ist akustisch besonders kritisch, da diese direkt an der Rückseite der Gondel sitzt und ungehindert in Richtung des Nachlaufs der Windenergieanlage, in dem nach Norm der Schall gemessen wird, abstrahlen kann.

Die Lüfter haben ähnlich wie der Generator auch einen dominanten Ton, welcher hier als charakteristische Lüfterschallfrequenz bzw. Blattpassierfrequenz (BPF) bezeichnet wird. Charakteristische Lüfterschallfrequenz, Blattpassierfrequenz und BPF können hier somit synonym verwendet werden, oder ähnlich behandelt werden. Die Lüfterschallfrequenz ist auch drehzahlabhängig.

Der Algorithmus soll verhindern, dass sich die Lüfterschallfrequenzen der Lüfter zu irgendeinem Zeitpunkt, bzw. bei irgendeiner Drehzahl, im "vermeidbaren Bereich" befinden und sich mit dem Generatorton überlagern.

Es kann theoretisch auch mehrere vermeidbare Bereiche abhängig von der Anwendung geben.

Weiterhin sollen möglichst alle Lüfter mit unterschiedlichen Lüfterdrehzahlen betrieben werden. Der Drehzahlunterschied soll jedoch zwischen den Lüftern auch variable sein, sodass Lüfterschallfrequenzen von Lüftern auch "oberhalb" und "unterhalb" des Generatortones im Spektrum liegen können. Häufiger werden aber die Lüfterschallfrequenzen konstruktionsbedingt unterhalb der Generatorschallfrequenz liegen.

Die Harmonischen (Vielfachen) der Lüfterschallfrequenz, bzw. andere mögliche einbaubedingte dominante Frequenzbereiche des Lüfters müssen ggf. je nach Ausprägung auch in der Regelung berücksichtigt werden, was erfindungsgemäß erkannt wurde.

Weiterhin soll sich der "Lüfterindex" in regelmäßigen Zeitabständen ändern (z.B. alle 15 Minuten), sodass eine gleichmäßigere Kühlung von Kühlrippen bzw. einer Kühlflüssigkeit stattfindet. Die Lüfter werden also quasi untereinander getauscht. Durch die Drehzahlverschiebung wird die Kühlerfläche ansonsten unterschiedlich stark durchströmt und dadurch nicht gleichmäßig abgekühlt. Dieses Vorgehen könnte ebenso bei den Generatorlüftern eingesetzt werden, um eine gleichmäßigere Kühlung des Generators zu erzielen. Dies könnte sich positiv auf den Wirkungsgrad auswirken.

Als Input-Parameter für den Algorithmus kommen insbesondere Parameter infrage ausgewählt aus der Liste umfassend eine Anzahl an Lüftern, eine Anzahl an Schaufeln oder Rotorblätter der Lüfter, eine Ordnung der Harmonischen des Generators, eine Anzahl Nuten des Generators, eine Anzahl Polpaare des Generators, eine Tonbreite des Generatortones, eine Drehzahl des Generators, ein minimaler Frequenzabstand zwischen den Lüftern untereinander, ein Marker zur Maskierung (AN/AUS).

Sofern der Marker der Maskierung auf AN steht, werden die Lüftertöne, also die charakteristischen Lüfterfrequenzen, in den nahen Bereich der Generatorschallfrequenz gefahren.

Als Output-Parameter werden die Solldrehzahlen der Lüfter bestimmt. Die Lüfterdrehzahl der Lüfter wird gemäß Solldrehzahl eingestellt.

Die Erfindung dient auch der akustischen Optimierung einer Windenergieanlage. Mit der Erfindung soll das Auftreten einer Tonhaltigkeit oder die Überschreitung von garantierten Schallleistungspegeln in bestimmten Terz-/ Oktavbändern verhindert werden. Überschreitungen können zu Abschaltungen und somit zu Ertragsverlusten führen. Weiterhin soll durch die Maskierung der "Klang" verbessert bzw. die "Lästigkeit" der Windenergieanlage verringert werden, um die Akzeptanz zu steigern.

**Patentansprüche**

1. Verfahren zum Verändern einer Schallemission einer Windenergieanlage (100), wobei

   - die Windenergieanlage eine Gondel (104) und einen Generator mit einem in seiner Drehzahl einstellbaren Rotor (106) umfasst, und der Rotor wenigstens ein Rotorblatt aufweist,
   - der Generator Schall mit wenigstens einer von der Rotordrehzahl abhängigen charakteristischen Generatorschallfrequenz erzeugt,
   - die Windenergieanlage wenigstens einen Lüfter zum Kühlen der Gondel und/oder des Generators aufweist,
   - der wenigstens eine Lüfter in einer Lüfterdrehzahl einstellbar ist, wobei

   - der wenigstens eine Lüfter Schall mit einer von der Lüfterdrehzahl abhängigen charakteristischen Lüfterschallfrequenz erzeugt, und
   - die Lüfterdrehzahl des wenigstens einen Lüfters in Abhängigkeit von der Rotordrehzahl so eingestellt wird, dass die Lüfterschallfrequenz von der wenigstens einen Generatorschallfrequenz abweicht, **dadurch gekennzeichnet, dass**

   - in Abhängigkeit von der Rotordrehzahl wenigstens eine kritische Lüfterdrehzahl als von dem jeweiligen Lüfter zu vermeidende Drehzahl bestimmt wird, und
   - die Lüfterdrehzahl jedes Lüfters derart vorgegeben wird, dass die wenigstens eine kritische Lüfterdrehzahl vermieden wird, wobei
   - die wenigstens eine kritische Lüfterdrehzahl bei baugleichen Lüftern gleich ist, und/oder
   - die wenigstens eine kritische Lüfterdrehzahl einer Lüfterdrehzahl entspricht, bei der die zugehörige Lüfterschallfrequenz der Generatorschallfrequenz entspricht.

2. Verfahren nach Anspruch 1, **dadurch gekennzeichnet, dass** als die Generatorschallfrequenz eine Harmonische einer Frequenzgröße des Generators, von der der Schall abhängt, verwendet wird, insbesondere eine Harmonische einer Polpassierfrequenz, die angibt, wie oft ein Rotorpol eine Referenzposition passiert, insbesondere die 12. Harmonische der Frequenzgröße, und

   - als die Lüfterschallfrequenz eine Grundfrequenz oder Harmonische des vom Lüfter erzeugten Schalls verwendet wird, wobei insbesondere
   - die Lüfterschallfrequenz $f_L$ eine Blattpassierfrequenz ist, und die Lüfterschallfrequenz $f_L$ in Abhängigkeit von der Lüfterdrehzahl $n_L$ und einer Anzahl an Lüfterrotorblättern $A_L$, bestimmt wird, insbesondere nach der Formel:

$$f_L[Hz] = n_L \frac{[rpm]}{60} \cdot A_L \ .$$

3. Verfahren nach Anspruch 1 oder 2, **dadurch gekennzeichnet, dass**

   - die Lüfterdrehzahl des wenigstens einen Lüfters so vorgegeben wird, dass die zugehörige Lüfterschallfrequenz maximal um eine vorgebbare Maskierungsabweichung von der Generatorschallfrequenz abweicht, um die Generatorschallfrequenz zu maskieren.

4. Verfahren nach einem der vorstehenden Ansprüche, **dadurch gekennzeichnet, dass**

- die kritische Lüfterdrehzahl $n_{L,i}$ für jeden Lüfter i bestimmt wird in Abhängigkeit von

- der Rotordrehzahl $n_R$,
- einer Anzahl Polpaare $P_G$ des Generators,
- einer oder der Anzahl an Lüfterrotorblättern $A_{L,i}$ des Lüfters i, und
- einer Ordnung k des vom Generator erzeugten Schalls, mit der Ordnung k als kennzeichnende Ordnung des Generators, und/oder als Ordnung einer bzw. der Harmonischen, die als Generatorschallfrequenz verwendet wird, wobei

- die kritische Lüfterdrehzahl bestimmt wird als

$$n_{L,i} = \frac{n_R \cdot k \cdot P_G}{A_{L,i}}.$$

5. Verfahren nach einem der vorstehenden Ansprüche, **dadurch gekennzeichnet, dass**

- die Windenergieanlage mehrere Lüfter zum Kühlen der Gondel und/oder des Generators aufweist, wobei
- die Lüfter jeweils in ihrer Lüfterdrehzahl einstellbar sind und jeweils Schall mit einer von ihrer Lüfterdrehzahl abhängigen charakteristischen Lüfterschallfrequenz erzeugen, und
- jede der Lüfterdrehzahlen, jeweils in Abhängigkeit von der Rotordrehzahl, so eingestellt wird, dass ihre Lüfterschallfrequenz von der Generatorschallfrequenz abweicht, und insbesondere
- die Lüfterdrehzahlen so eingestellt werden, dass sich ihre Lüfterschallfrequenzen auch untereinander unterscheiden.

6. Verfahren nach einem der vorstehenden Ansprüche, **dadurch gekennzeichnet, dass**

- wenigstens ein Frequenzabstand vorgegeben wird als Frequenzdifferenz zwischen jeweils zwei Lüfterschallfrequenzen zweier Lüfter, und
- die Lüfterdrehzahlen der Lüfter in Abhängigkeit von dem Frequenzabstand so eingestellt werden, dass
- Lüfterschallfrequenzen wenigstens zweier Lüfter zueinander den Frequenzabstand aufweisen.

7. Verfahren nach einem der vorstehenden Ansprüche, **dadurch gekennzeichnet, dass**

- ein bzw. der Frequenzabstand als Frequenzdifferenz zwischen jeweils zwei Lüfterschallfrequenzen zweier Lüfter variabel einstellbar ist, und/oder
- der Frequenzabstand zwischen den Lüftern zueinander unterschiedlich ist, wobei insbesondere
- der Frequenzabstand in Abhängigkeit von wenigstens einem Wetterparameter gewählt wird, aus der Liste umfassend

- eine Außentemperatur,
- eine Luftfeuchtigkeit,
- einen atmosphärischen Luftdruck,
- eine Niederschlagsrate,
- eine Tröpfchengröße,
- eine Schneefallrate und
- eine Windgeschwindigkeit.

8. Verfahren nach einem der vorstehenden Ansprüche, **dadurch gekennzeichnet, dass** ein bzw. der Frequenzabstand als Frequenzdifferenz zwischen jeweils zwei Lüfterschallfrequenzen zweier Lüfter variabel einstellbar ist, und

- der Frequenzabstand zwischen den Lüftern mit größerem Abstand zur Generatorschallfrequenz abnimmt.

9. Verfahren nach einem der vorstehenden Ansprüche, **dadurch gekennzeichnet, dass** ein bzw. der Frequenzabstand als Frequenzdifferenz zwischen jeweils zwei Lüfterschallfrequenzen zweier Lüfter in Abhängigkeit von der Rotordrehzahl vorgegeben wird, und

- der Frequenzabstand umso geringer vorgegeben wird, je geringer die Rotordrehzahl ist.

10. Verfahren nach einem der vorstehenden Ansprüche, **dadurch gekennzeichnet, dass**

- die Generatorschallfrequenz eine Tonbreite, insbesondere eine ERB-Breite, als charakteristische Frequenzbreite aufweist, wobei die Tonbreite einen charakteristischen Frequenzbereich um die Generatorschallfrequenz definiert, und
- in Abhängigkeit von der Tonbreite ein zu vermeidender Frequenzbereich mit einer Vermeidungsbreite bestimmt wird, wobei die Vermeidungsbreite den zu vermeidenden Frequenzbereich als Frequenzbereich um die Generatorschallfrequenz definiert und die Vermeidungsbreite kleiner als die Tonbreite ist, sodass der zu vermeidende Frequenzbereich innerhalb des charakteristischen Frequenzbereichs liegt, und
- die Lüfterdrehzahl jedes Lüfters so eingestellt wird, dass die Lüfterschallfrequenz

- außerhalb des zu vermeidenden Frequenzbereiches und/oder
- innerhalb des charakteristischen Frequenzbereiches liegt.

11. Verfahren nach einem der vorstehenden Ansprüche, **dadurch gekennzeichnet, dass**

- die Lüfterdrehzahl jeweils als Lüfterdrehzahl-Kennlinie vorgegeben wird, wobei
- die Lüfterdrehzahl-Kennlinie eine Funktion der Lüfterdrehzahl in Abhängigkeit von der Rotordrehzahl beschreibt, wobei insbesondere

- die Lüfterdrehzahl-Kennlinie als lineare Kennlinie vorgesehen ist.

12. Verfahren nach einem der vorstehenden Ansprüche, **dadurch gekennzeichnet, dass**

- für jeden Lüfter eine eigene Lüfterdrehzahl-Kennlinie vorgesehen ist und
- die Lüfterdrehzahl-Kennlinien mehrerer Lüfter jeweils um ein vorgebbares Drehzahlabweichungskriterium voneinander abweichen, insbesondere dass
- die Lüfterdrehzahl-Kennlinien mehrerer Lüfter um eine vorgebbare Differenzdrehzahl zueinander verschoben sind und/oder um einen Drehzahlabweichungsfaktor voneinander abweichen, der im Bereich von 0,8 bis 1,2 liegt, und/oder dass
- zu den Lüfterdrehzahl-Kennlinien zugehörige Lüfterschallfrequenz-Kennlinien mehrerer Lüfter, die jeweils eine Lüfterschallfrequenz in Abhängigkeit von der Rotordrehzahl beschreiben, jeweils um ein vorgebbares Frequenzabweichungskriterium voneinander abweichen, insbesondere dass
- die Lüfterschallfrequenz-Kennlinien mehrerer Lüfter um eine vorgebbare Differenzfrequenz zueinander verschoben sind und/oder um einen Frequenzabweichungsfaktor, der dem Drehzahlabweichungsfaktor entsprechen kann, voneinander abweichen, der im Bereich von 0,8 bis 1,2 liegt.

13. Verfahren nach einem der vorstehenden Ansprüche, **dadurch gekennzeichnet, dass** die Windenergieanlage wenigstens zwei Lüfter zum Kühlen der Gondel und/oder des Generators aufweist, wobei

- die Lüfter in einer Lüfterreihenfolge sortierbar sind,
- die Lüfterdrehzahlen bzw. Lüfterdrehzahl-Kennlinien der Lüfter entsprechend der Lüfterreihenfolge ausgewählt werden und
- die Lüfterreihenfolge nach einer vorgebbaren Tauschzeit oder in Abhängigkeit von einem anderen Tauschkriterium verändert wird, sodass
- die Lüfterdrehzahlen bzw. Lüfterdrehzahl-Kennlinien der Lüfter entsprechend der veränderten Lüfterreihenfolge neu ausgewählt werden.

14. Verfahren nach einem der vorstehenden Ansprüche, **dadurch gekennzeichnet, dass** die Windenergieanlage wenigstens eine weitere Geräuschquelle aufweist, und

- die wenigstens eine weitere Geräuschquelle weiteren Schall mit jeweils konstanter Frequenz erzeugt, wobei
- die Lüfterdrehzahl des wenigstens einen Lüfters so eingestellt wird, dass die Lüfterschallfrequenz von der konstanten Frequenz abweicht.

15. Windenergieanlage umfassend eine Gondel und einen Generator mit einem in seiner Drehzahl einstellbaren Rotor, wobei der Rotor wenigstens ein Rotorblatt aufweist,

- der Generator Schall mit wenigstens einer von der Rotordrehzahl abhängigen charakteristischen Generatorschallfrequenz erzeugt,
- die Windenergieanlage wenigstens einen Lüfter zum Kühlen der Gondel und/oder des Generators aufweist,
- der wenigstens eine Lüfter in einer Lüfterdrehzahl einstellbar ist, wobei
- der wenigstens eine Lüfter Schall mit einer von der Lüfterdrehzahl abhängigen charakteristischen Lüfterschallfrequenz erzeugt, und
- die Windenergieanlage ein Steuermodul aufweist, und
- zur Veränderung einer Schallemission das Steuermodul eine Lüfterdrehzahl des wenigstens einen Lüfters in Abhängigkeit von der Rotordrehzahl so einstellt, dass die Lüfterschallfrequenz von der wenigstens einen Generatorschallfrequenz abweicht, und
- die Lüfterdrehzahl des wenigstens einen Lüfters nach einem Verfahren gemäß einem der Ansprüche 1-14 eingestellt wird, wobei
- in Abhängigkeit von der Rotordrehzahl wenigstens eine kritische Lüfterdrehzahl als von dem jeweiligen Lüfter zu vermeidende Drehzahl bestimmt wird, und
- die Lüfterdrehzahl jedes Lüfters derart vorgegeben wird, dass die wenigstens eine kritische Lüfterdrehzahl vermieden wird, wobei
- die wenigstens eine kritische Lüfterdrehzahl bei baugleichen Lüftern gleich ist, und/oder
- die wenigstens eine kritische Lüfterdrehzahl einer Lüfterdrehzahl entspricht, bei der die zugehörige Lüfterschallfrequenz der Generatorschallfrequenz entspricht.

**Claims**

1. Method for modifying a sound emission of a wind power installation (100), wherein

   - the wind power installation comprises a nacelle (104) and a generator with a rotor (106) which is adjustable in terms of its rotational speed, and the rotor has at least one rotor blade,
   - the generator produces sound with at least one characteristic generator sound frequency which depends on the rotor rotational speed,
   - the wind power installation has at least one fan for cooling the nacelle and/or generator,
   - the at least one fan is adjustable in terms of a fan rotational speed, wherein
   - the at least one fan produces sound with a characteristic fan sound frequency which depends on the fan rotational speed, and
   - the fan rotational speed of the at least one fan is set in such a way on the basis of the rotor rotational speed that the fan sound frequency deviates from the at least one generator sound frequency, **characterized in that**
   - at least one critical fan rotational speed is determined on the basis of the rotor rotational speed as a rotational speed to be avoided by the respective fan, and
   - the fan rotational speed of each fan is specified in such a way that the at least one critical fan rotational speed is avoided, wherein
   - the at least one critical fan rotational speed is the same for fans of identical construction, and/or
   - the at least one critical fan rotational speed corresponds to a fan rotational speed at which the associated fan sound frequency corresponds to the generator sound frequency.

2. Method according to Claim 1, **characterized in that** a harmonic of a frequency variable of the generator is used as the generator sound frequency, in particular a harmonic of a pole passing frequency which specifies how often a rotor pole passes a reference position, in particular the 12th harmonic of the frequency variable, on which the sound depends, and

   - a fundamental frequency or harmonic of the sound produced by the fan is used as the fan sound frequency, wherein in particular
   - the fan sound frequency $f_L$ is a blade passing frequency and the fan sound frequency $f_L$ is determined on the basis of the fan rotational speed $n_L$ and a number of fan rotor blades $A_L$, in particular according to the formula:

$$f_L[Hz] = n_L \frac{[rpm]}{60} \cdot A_L.$$

3. Method according to claim 1 or 2, **characterized in that**

   - the fan rotational speed of the at least one fan is specified in such a way that the associated fan sound frequency deviates from the generator sound frequency by no more than a specifiable masking deviation, in order to mask the generator sound frequency.

4. Method according to any of the preceding claims, **characterized in that**

   - the critical fan rotational speed $n_{L,i}$ is determined for each fan $i$ on the basis of

     - the rotor rotational speed $n_R$,
     - a number of pole pairs $P_G$ of the generator,
     - a number or the number of fan rotor blades $A_{L,i}$ of the fan i, and
     - an order k of the sound produced by the generator, with the order k as characteristic order of the generator, and/or as an order of a harmonic or the harmonic used as the generator sound frequency, wherein

   - the critical fan rotational speed is determined as

$$n_{L,i} = \frac{n_R \cdot k \cdot P_G}{A_{L,i}}.$$

5. Method according to any of the preceding claims, **characterized in that**

   - the wind power installation has a plurality of fans for cooling the nacelle and/or generator, wherein
   - the fans are each adjustable in terms of their fan rotational speed and each produce sound with a characteristic fan sound frequency which depends on their fan rotational speed, and
   - each of the fan rotational speeds is set, respectively dependent on the rotor rotational speed, in such a way that its fan sound frequency deviates from the generator sound frequency, and in particular
   - the fan rotational speeds are set in such a way that their fan sound frequencies also differ from one another.

6. Method according to any of the preceding claims, **characterized in that**

- at least one frequency spacing is specified as the frequency difference respectively between two fan sound frequencies of two fans, and

- the fan rotational speeds of the fans are set in such a way on the basis of the frequency spacing that

- fan sound frequencies of at least two fans have the frequency spacing from one another.

7. Method according to any of the preceding claims, **characterized in that**

- a frequency spacing or the frequency spacing is variably adjustable as the frequency difference respectively between two fan sound frequencies of two fans, and/or

- the frequency spacing among the fans is different from one another, wherein in particular

- the frequency spacing is chosen on the basis of at least one weather parameter, from the list comprising

- an outside temperature,
- a humidity,
- an atmospheric pressure,
- a rate of precipitation,
- a droplet size,
- a rate of snowfall and
- a wind speed.

8. Method according to any of the preceding claims, **characterized in that**
a frequency spacing or the frequency spacing is variably adjustable as the frequency difference respectively between two fan sound frequencies of two fans, and

- the frequency spacing among the fans reduces with increasing distance from the generator sound frequency.

9. Method according to any of the preceding claims, **characterized in that**
a frequency spacing or the frequency spacing is specified as the frequency difference respectively between two fan sound frequencies of two fans, depending on the rotor rotational speed, and

- the frequency spacing is specified to be ever smaller, the lower the rotor rotational speed is.

10. Method according to any of the preceding claims, **characterized in that**

- the generator sound frequency has a tone bandwidth, in particular an ERB bandwidth, as characteristic frequency bandwidth, with the tone bandwidth defining a characteristic frequency range around the generator sound frequency, and

- a frequency range to be avoided, having an avoidance bandwidth, is determined on the basis of the tone bandwidth, with the avoidance bandwidth defining the frequency range to be avoided as the frequency range around the generator sound frequency and the avoidance bandwidth being smaller than the tone bandwidth, with the result that the frequency range to be avoided is located within the characteristic frequency range, and

- the fan rotational speed of each fan is set so that the fan sound frequency is located

- outside of the frequency range to be avoided and/or
- within the characteristic frequency range.

11. Method according to any of the preceding claims, **characterized in that**

- the fan rotational speed is respectively specified as a fan rotational speed characteristic, wherein

- the fan rotational speed characteristic describes a function of the fan rotational speed depending on the rotor rotational speed, wherein in particular

- the fan rotational speed characteristic is provided as a linear characteristic.

12. Method according to any of the preceding claims, **characterized in that**

- a dedicated fan rotational speed characteristic is provided for each fan and

- the fan rotational speed characteristics of a plurality of fans respectively deviate from one another by a specifiable rotational speed deviation criterion, in particular **in that**

- the fan rotational speed characteristics of a plurality of fans are shifted from one another by a specifiable difference rotational speed and/or deviate from one another by a rotational speed deviation factor ranging between 0.8 and 1.2, and/or **in that**

- fan sound frequency characteristics, which are associated with the fan rotational speed characteristics and each describe a fan sound frequency depending on the rotor rotational speed, of a plurality of fans respectively deviate from one another by a specifiable frequency deviation criterion, in particular **in that**

- the fan sound frequency characteristics of a plurality of fans are shifted from one another by a specifiable difference frequency and/or deviate from one another by a frequency deviation factor, which may correspond to the rotational speed deviation factor, ranging between 0.8 and 1.2.

13. Method according to any of the preceding claims, **characterized in that** the wind power installation has at least two fans for cooling the nacelle and/or generator, wherein

- the fans can be sorted in a fan sequence,
- the fan rotational speeds or fan rotational speed characteristics of the fans are selected in accordance with the fan sequence and
- the fan sequence is modified in such a way after a specifiable exchange time or on the basis of another exchange criterion that

- the fan rotational speeds or fan rotational speed characteristics of the fans are selected anew in accordance with the modified fan sequence.

14. Method according to any of the preceding claims, **characterized in that** the wind power installation has at least one further source of noise and

- the at least one further source of noise produces further sound at in each case a constant frequency, wherein
- the fan rotational speed of the at least one fan is set in such a way that the fan sound frequency deviates from the constant frequency.

15. Wind power installation comprising a nacelle and a generator with a rotor which is adjustable in terms of its rotational speed, wherein the rotor has at least one rotor blade,

- the generator produces sound with at least one characteristic generator sound frequency which depends on the rotor rotational speed,
- the wind power installation has at least one fan for cooling the nacelle and/or generator,
- the at least one fan is adjustable in terms of a fan rotational speed, wherein
- the at least one fan produces sound with a characteristic fan sound frequency which depends on the fan rotational speed, and
- the wind power installation has a control module, and
- the control module sets a fan rotational speed of the at least one fan in such a way on the basis of the rotor rotational speed and for the purpose of modifying a sound emission that the fan sound frequency deviates from the at least one generator sound frequency, and

- the fan rotational speed of the at least one fan is set in accordance with a method according to any of Claims 1-14, wherein
- at least one critical fan rotational speed is determined on the basis of the rotor rotational speed as a rotational speed to be avoided by the respective fan, and
- the fan rotational speed of each fan is specified in such a way that the at least one critical fan rotational speed is avoided, wherein
- the at least one critical fan rotational speed is the same for fans of identical construction, and/or
- the at least one critical fan rotational speed corresponds to a fan rotational speed at which the associated fan sound frequency corresponds to the generator sound frequency.

**Revendications**

1. Procédé destiné à modifier une émission sonore d'une éolienne (100), dans lequel

- l'éolienne comprend une nacelle (104) et un générateur avec un rotor (106) dont la vitesse de rotation est réglable, et le rotor présente au moins une pale,
- le générateur produit un son avec au moins une fréquence sonore de générateur caractéristique dépendant de la vitesse de rotation du rotor,
- l'éolienne présente au moins un ventilateur pour le refroidissement de la nacelle et/ou du générateur,
- l'au moins un ventilateur est réglable à une vitesse de rotation de ventilateur, dans lequel
- l'au moins un ventilateur produit au moins un son de ventilateur avec une fréquence sonore de ventilateur caractéristique dépendant de la vitesse de rotation du ventilateur, et
- la vitesse de rotation de ventilateur de l'au moins un ventilateur est réglée, en fonction de la vitesse de rotation de rotor, de telle sorte que la fréquence sonore de ventilateur diffère de l'au moins une fréquence sonore de générateur, **caractérisé en ce que**
- en fonction de la vitesse de rotation du rotor, au moins une vitesse de rotation critique du ventilateur est déterminée comme vitesse de rotation à éviter par le ventilateur respectif, et
- la vitesse de rotation de ventilateur de chaque ventilateur est prédéfinie de manière à éviter l'au moins une vitesse de rotation critique de ventilateur, dans lequel
- l'au moins une vitesse de rotation de ventilateur critique est identique pour des ventilateurs de construction identique, et/ou
- l'au moins une vitesse de rotation de ventilateur critique correspond à une vitesse de rotation de ventilateur, à laquelle la fréquence sonore de ventilateur associée correspond à la fréquence sonore de générateur.

**2.** Procédé selon la revendication 1, **caractérisé en ce que**

est utilisée comme la fréquence sonore de générateur un harmonique d'une grandeur de fréquence du générateur dont dépend le son, en particulier un harmonique d'une fréquence de passage de pôle qui indique à quelle fréquence un pôle de rotor passe une position de référence, en particulier le 12e harmonique de la grandeur de fréquence, et

- est utilisée comme la fréquence sonore de ventilateur une fréquence fondamentale ou un harmonique du son produit par le ventilateur, dans lequel en particulier
- la fréquence sonore de ventilateur $f_L$ est une fréquence de passage de pales, et la fréquence sonore de ventilateur $f_L$ est déterminée en fonction de la vitesse de rotation de ventilateur $n_L$ et d'un nombre de pales de rotor de ventilateur $A_L$, en particulier selon la formule :

$$f_L[Hz] = n_L \frac{[tr/min]}{60} \cdot A_L.$$

**3.** Procédé selon la revendication 1 ou 2, **caractérisé en ce que**

- la vitesse de rotation de ventilateur de l'au moins un ventilateur est prédéfinie de telle sorte que la fréquence sonore de ventilateur associée diffère au maximum d'un écart de masquage pouvant être prédéfini par rapport à la fréquence sonore de générateur pour masquer la fréquence sonore de générateur.

**4.** Procédé selon l'une quelconque des revendications précédentes, **caractérisé en ce que**

- la vitesse de rotation de ventilateur critique $n_{L,i}$ pour chaque ventilateur i est déterminée en fonction
- de la vitesse de rotation de rotor $n_R$,
- d'un nombre de paires de pôles $P_G$ du générateur,
- d'une ou de plusieurs pales de rotor de ventilateur $A_{L,i}$ du ventilateur i, et
- d'un ordre k du son produit par le générateur, l'ordre k étant l'ordre caractéristique du générateur et/ou l'ordre d'un ou de plusieurs harmoniques qui sont utilisés comme fréquence sonore de générateur, dans lequel
- la vitesse de rotation de ventilateur critique est déterminée comme

$$n_{L,i} = \frac{n_R \cdot k \cdot P_G}{A_{L,i}}.$$

**5.** Procédé selon l'une quelconque des revendications précédentes, **caractérisé en ce que**

- l'éolienne présente plusieurs ventilateurs pour le refroidissement de la nacelle et/ou du générateur, dans lequel
- les ventilateurs sont chacun réglables dans leur vitesse de rotation de ventilateur et produisent chacun un son avec une fréquence sonore de ventilateur caractéristique dépendant de leur vitesse de rotation de ventilateur,
- chacune des vitesses de rotation de ventilateur, respectivement en fonction de la vitesse de rotation de rotor, est réglée de telle sorte que leur fréquence sonore de ventilateur diffère de la fréquence sonore de générateur, et en particulier
- les vitesses de rotation de ventilateur sont réglées de telle sorte que leurs fréquences sonores de ventilateur sont aussi différentes les unes des autres.

**6.** Procédé selon l'une quelconque des revendications précédentes, **caractérisé en ce que**

- au moins un espacement de fréquence est prédéfini comme la différence de fréquence entre respectivement deux fréquences sonores de ventilateur, et
- les vitesses de rotation de ventilateur des ventilateurs sont réglées en fonction de l'espacement de fréquence de telle sorte que
- les fréquences sonores de ventilateur d'au moins deux ventilateurs présentent les unes par rapport aux autres l'espacement de fréquence.

**7.** Procédé selon l'une quelconque des revendications précédentes, **caractérisé en ce que**

- un ou l'espacement de fréquence peut être réglé de manière variable en tant que différence de fréquence entre respectivement deux fréquences sonores de ventilateur de deux ventilateurs, et/ou
- l'espacement de fréquence entre les ventilateurs les uns par rapport aux autres est différent, dans lequel en particulier
- l'espacement de fréquence est choisi en fonction d'au moins un paramètre météorologique, issu de la liste comprenant
- une température extérieure,

- une humidité de l'air,
- une pression atmosphérique,
- un taux de précipitations,
- une taille de gouttelette,
- un taux de chute de neige et
- une vitesse du vent.

8. Procédé selon l'une quelconque des revendications précédentes, **caractérisé en ce qu'**un ou l'espacement de fréquence, en tant que différence de fréquence entre respectivement deux fréquences sonores de ventilateur de deux ventilateurs, peut être réglé de manière variable, et

- l'espacement de fréquence entre les ventilateurs diminue à mesure que la distance par rapport à la fréquence sonore de générateur augmente.

9. Procédé selon l'une quelconque des revendications précédentes, **caractérisé en ce qu'**un ou l'espacement de fréquence, en tant que différence de fréquence entre respectivement deux fréquences sonores de ventilateur de deux ventilateurs, est prédéfini en fonction de la vitesse de rotation de rotor, et

- plus la vitesse de rotation de rotor est faible, plus l'espacement de fréquence prédéfini est réduit.

10. Procédé selon l'une quelconque des revendications précédentes,
**caractérisé en ce que**

- la fréquence sonore de générateur présente une largeur de tonalité, en particulier une largeur ERB, comme largeur de fréquence caractéristique, dans lequel la largeur de tonalité définit une plage de fréquences caractéristique autour de la fréquence sonore de générateur, et
- en fonction de la largeur de tonalité, une plage de fréquences à éviter est déterminée avec une largeur d'évitement, dans lequel la largeur d'évitement définit la plage de fréquences à éviter comme la plage de fréquences située autour de la fréquence sonore de générateur, et la largeur d'évitement est inférieure à la largeur de tonalité, si bien que la plage de fréquences à éviter se trouve à l'intérieur de la plage de fréquences caractéristique, et
- la vitesse de rotation de ventilateur de chaque ventilateur est réglée de telle sorte que la fréquence sonore de ventilateur se situe
- en dehors de la plage de fréquences à éviter et/ou
- dans la plage de fréquences caractéristique.

11. Procédé selon l'une quelconque des revendications précédentes,
**caractérisé en ce que**

- la vitesse de rotation de ventilateur est prédéfinie respectivement comme la courbe caractéristique de vitesse de rotation de ventilateur, dans lequel
- la courbe caractéristique de vitesse de rotation de ventilateur décrit une fonction de la vitesse de rotation de ventilateur en fonction de la vitesse de rotation de rotor, dans lequel en particulier
- la courbe caractéristique de vitesse de rotation de ventilateur est prévue comme une courbe caractéristique linéaire.

12. Procédé selon l'une quelconque des revendications précédentes, **caractérisé en ce que**

- une courbe caractéristique de vitesse de rotation de ventilateur propre est prévue pour chaque ventilateur et
- les courbes caractéristiques de vitesse de rotation de ventilateur de plusieurs ventilateurs diffèrent chacune d'un critère d'écart de vitesse de rotation pouvant être prédéfini, en particulier que
- les courbes caractéristiques de vitesse de rotation de ventilateur de plusieurs ventilateurs sont décalées les unes par rapport aux autres d'une vitesse de rotation différentielle pouvant être prédéfinie et/ou diffèrent les unes des autres d'un facteur d'écart de vitesse de rotation, qui se situe dans la plage allant de 0,8 à 1,2, et/ou que
- des courbes caractéristiques de fréquence sonore de ventilateur de plusieurs ventilateurs associées aux courbes caractéristiques de vitesse de rotation de ventilateur, qui décrivent chacune une fréquence sonore de ventilateur en fonction de la vitesse de rotation de rotor, diffèrent chacune d'un critère d'écart de fréquence pouvant être prédéfini, en particulier que
- les courbes caractéristiques de fréquence sonore de ventilateur de plusieurs ventilateurs sont décalées les unes par rapport aux autres d'une fréquence différentielle pouvant être prédéfinie et/ou d'un facteur d'écart de fréquence, qui peut correspondre au facteur d'écart de vitesse de rotation, qui se situe dans la plage allant de 0,8 à 1,2.

13. Procédé selon l'une quelconque des revendications précédentes, **caractérisé en ce que** l'éolienne présente au moins deux ventilateurs pour le refroidissement de la nacelle et/ou du générateur, dans lequel

- les ventilateurs peuvent être triés dans un ordre de ventilateurs,
- les vitesses de rotation de ventilateur ou les courbes caractéristiques de vitesse de rotation de ventilateur des ventilateurs sont sélectionnées en fonction de l'ordre des ventilateurs et
- l'ordre des ventilateurs est modifié après un temps de remplacement pouvant être prédéfini ou en fonction d'un autre critère de remplacement, si bien que
- les vitesses de rotation de ventilateur ou les courbes caractéristiques de vitesse de rotation de ventilateur des ventilateurs sont à nouveau sélectionnées en fonction de l'ordre modifié des ventilateurs.

14. Procédé selon l'une quelconque des revendications précédentes, **caractérisé en ce que** l'éolienne présente au moins une autre source de bruit, et

    - l'au moins une autre source de bruit produit un autre son avec une fréquence respectivement constante, dans lequel
    - la vitesse de rotation de ventilateur de l'au moins un ventilateur est réglée de telle sorte que la fréquence sonore de ventilateur diffère de la fréquence constante.

15. Eolienne comprenant une nacelle et un générateur avec un rotor dont la vitesse de rotation peut être réglée, dans laquelle le rotor présente au moins une pale de rotor,

    - le générateur produit un son avec au moins une fréquence sonore de générateur caractéristique dépendant de la vitesse de rotation de rotor,
    - l'éolienne présente au moins un ventilateur pour le refroidissement de la nacelle et/ou du générateur,
    - l'au moins un ventilateur est réglable à une vitesse de rotation de ventilateur, dans laquelle
    - l'au moins un ventilateur produit au moins un son de ventilateur avec une fréquence sonore de ventilateur caractéristique dépendant de la vitesse de rotation du ventilateur, et
    - l'éolienne présente un module de commande, et
    - pour modifier une émission sonore, le module de commande règle la vitesse de rotation de ventilateur de l'au moins un ventilateur en fonction de la vitesse de rotation de rotor de telle sorte que la fréquence sonore de ventilateur diffère de l'au moins une fréquence sonore de générateur, et
    - la vitesse de rotation de ventilateur de l'au moins un ventilateur est réglée selon un procédé selon l'une quelconque des revendications 1 à 14, dans laquelle

    - en fonction de la vitesse de rotation de rotor, au moins une vitesse de rotation de ventilateur critique est déterminée comme une vitesse de rotation à éviter par le ventilateur respectif, et
    - la vitesse de rotation de ventilateur de chaque ventilateur est prédéfinie de manière à éviter l'au moins une vitesse de rotation critique de ventilateur, dans laquelle
    - l'au moins une vitesse de rotation de ventilateur critique est identique pour des ventilateurs de construction identique, et/ou
    - l'au moins une vitesse de rotation de ventilateur critique correspond à une vitesse de rotation de ventilateur, à laquelle la fréquence sonore de ventilateur associée correspond à la fréquence sonore de générateur.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018086671 A1
- WO 2018046068 A1